# EUROPEAN PATENT SPECIFICATION

(11) **EP 3 603 823 B1**
(45) Date of publication and mention of the grant of the patent: **28.07.2021**
(21) Application number: 18775207.6
(22) Date of filing: 22.03.2018
(51) Int. Cl.: B05D 3/08, B05D 7/14, B32B 15/08, C09D 183/04

(54) **COATED METAL PLATE AND PRODUCTION METHOD THEREFOR**
BESCHICHTETE METALLPLATTE UND HERSTELLUNGSVERFAHREN DAFÜR
PLAQUE D'ACIER REVÊTUE ET PROCÉDÉ DE PRODUCTION ASSOCIÉ

(30) Priority: 29.03.2017 JP 2017065922; 01.06.2017 JP 2017109218; 30.06.2017 WO PCT/JP2017/024064; 28.12.2017 JP 2017254240
(43) Date of publication of application: 05.02.2020
(73) Proprietor: NIPPON STEEL CORPORATION, Chiyoda-ku Tokyo 100-8071 (JP)
(72) Inventor: SATOU, Masaki, Chiyoda-ku Tokyo 100-8366 (JP); SUZUKI, Seiju, Chiyoda-ku Tokyo 100-8366 (JP); SUGITA, Shuichi, Chiyoda-ku Tokyo 100-8366 (JP)
(74) Representative: Patentanwaltskanzlei WILHELM & BECK
(86) International application number: PCT/JP2018/011274
(87) International publication number: WO 2018/180831

(56) References cited:
- EP-A1- 0 943 634
- EP-A1- 3 604 463
- EP-A2- 0 635 553
- WO-A1-2018/025450
- JP-A- H0 559 330
- JP-A- H0 847 669
- JP-A- S63 151 380
- JP-A- 2002 186 900
- JP-A- 2002 307 606
- JP-A- 2005 186 035
- JP-A- 2006 102 671

## Description

### Technical Field

The present invention relates to a coated metal sheet and a production method therefor.

### Background Art

Coated metal sheets are frequently used in outdoor constructions, civil engineering structures and the like. Such coated metal sheets suffer stains due to adherence of carbon-based pollutional material (hereinafter also referred to as "hydrophobic carbon") contained in exhaust from automobiles, industrial smoke and the like. Among stains, stains adhering along rain streaks (hereinafter also referred to as "rain-streak stain") are particularly noticeable. Such a rain-streak stain always noticeably appears within a relatively short time on a conventional coated metal sheet, and therefore there is a demand for a coated metal sheet on which a rain-streak stain is not easily generated.

In recent years, it has been proposed to prevent a rain-streak stain by employing a coating film having a water contact angle of 60° or less, namely a hydrophilic coating film. On the surface of a hydrophilic coating film having a low water contact angle, it is believed that hydrophobic carbon is more likely to leave the surface with rainwater and thus washed away. One example of an approach for hydrophilizing the surface of a coated metal sheet is a method in which a coating material containing tetraalkoxysilane or a condensate thereof (hereinafter also referred to as "organosilicate") is applied on the surface of a metal sheet (PTL 1). Another method has also been proposed, in which a coating material containing a vinyl group-containing polysiloxane resin or the like is applied to a metal sheet and the coating film is subjected to a corona discharge treatment (PTL 2). Furthermore, a method has also been proposed in which a coating material containing a polyester resin is applied to a metal sheet and the coating film is subjected to a corona discharge treatment at 200 W/m²/min or more (PTL 3). Furthermore, a method has also been proposed in which a coating material containing organosilicate or the like is applied to a metal sheet and the coating film is subjected to a flame treatment, plasma treatment or corona discharge treatment (PTL 4).

### Citation List

### Patent Literature

PTL 1
   WO1994/6870
PTL 2
   Japanese Patent Application Laid-Open No. H05-59330
PTL 3
   Japanese Patent Application Laid-Open No. 2000-61391
PTL 4
   Japanese Patent Application Laid-Open No. 2006-102671

### Summary of Invention

### Technical Problem

Above-described PTL 1 describes applying a coating material containing organosilicate such as methyl silicate or ethyl silicate to the surface of a metal sheet. When the coating material is applied to the surface of the metal sheet, organosilicate moves to the surface side. Then, on the surface of the cured film (coating film) of the coating material, organosilicate reacts with moisture or the like in the air to produce silanol groups or siloxane bonds on the surface of the coating film. As a result of this, it is believed that the surface of the coating film is hydrophilized.

However, methyl silicate has high compatibility with a resin or the like contained in the coating material. Therefore, when the coating is applied, it is hard for methyl silicate to move to the surface side. Accordingly, hydrophilicity of the surface of the coating film is unlikely to be enhanced sufficiently. In this case, hardness of the surface of the coating film is also unlikely to be enhanced sufficiently. On the other hand, ethyl silicate has low compatibility with a resin or the like contained in the coating material. Therefore, when the coating material is applied to the surface of the metal sheet, ethyl silicate moves to the surface side to some extent. However, ethyl silicate is unlikely to be hydrolyzed on the surface of the coating film and it takes time to hydrophilize the surface of the coating film. Accordingly, rain-streak stains are generated before the coating film is sufficiently hydrophilized.

That is, it has been difficult for either organosilicate to sufficiently suppress occurrence of rain-streak stains. In addition, as mentioned above, in a coating film containing a cured product of organosilicate, hardness of the surface is unlikely to be enhanced sufficiently, and thus, scratch resistance is low. Furthermore, there has been a problem in that, when a cured product of organosilicate is contained in the entire coating film, the film tends to be cracked easily and bending processability is low.

In addition, when a coating material contains the organosilicate described above (methyl silicate or ethyl silicate), upon heating and drying a film composed of the coating material, organosilicate tends to be evaporated along with a solvent and adheres to the wall surface of a heating apparatus, thereby producing silica. Then, when that silica comes in contact with the film during heating or when that silica comes off from the heating apparatus and adheres to the surface of the film, poor appearance of a coated metal sheet to be obtained tends to occur.

Meanwhile, it has been difficult for techniques described in above-mentioned PTLS 2 to 4 to sufficiently prevent rain-streak stains. For example, in the techniques described in PTLS 2 and 3, after applying a coating material to the surface of a metal sheet, a corona discharge treatment is carried out. However, it is difficult to uniformly hydrophilize the surface of the coating film only by carrying out the corona discharge treatment. When various coating films are subjected to a corona discharge treatment, hydrophilic areas and hydrophobic areas are formed on the surface of coating films. Then, hydrophobic carbon adheres strongly to hydrophobic areas. On the other hand, in hydrophilic areas, hydrophobic carbon leaves the surface with rainwater. Then, the hydrophobic carbon leaving the surface is attracted to hydrophobic carbon adhering to hydrophobic areas, and hydrophobic carbon is gradually deposited around hydrophobic areas as base points. That is, it has been difficult to obtain a coated metal sheet having high rain-streak stain resistance through the corona discharge treatment.

Furthermore, in PTL 4, after a coating material containing ethyl silicate is applied, the coating film is subjected to a flame treatment, plasma treatment or corona discharge treatment. As mentioned above, in a coating material containing ethyl silicate, there has been a problem in that ethyl silicate tends to be evaporated along with a solvent upon heating and drying a film composed of the coating material and poor appearance of a coated metal sheet to be obtained tends to occur. Furthermore, in a coating film containing a cured product of organosilicate, there has also been a problem in that it is difficult to sufficiently enhance scratch resistance or bending processability even when various treatments are carried out.

The present invention has been completed in view of the above circumstances. That is, an object of the present invention is to provide a coated metal sheet having high rain-streak stain resistance and scratch resistance, and further having satisfactory appearance, as well as a production method thereof.

### Solution to Problem

A solution is proposed according to the method of claim 1 and according to the coated metal sheet of claim 5.

### Advantageous Effects of Invention

The coated metal sheet of the present invention has high rain-streak stain resistance, and has satisfactory scratch resistance and bending processability. In addition, according to the production method of the present invention, it is further possible to produce a coated metal sheet having high rain-streak stain resistance and scratch resistance, and further having satisfactory appearance.

### Brief Description of Drawings

FIG. 1A is a side view of a burner head of a burner for flame treatment, FIG. 1B is a front view of the burner head, and FIG. 1C is a bottom view of the burner head;
FIG. 2A is a side view of a burner head of another burner for flame treatment, and FIG. 2B is a bottom view of the burner head;
FIG. 3 is a schematic cross-sectional view of a coated metal sheet of the present invention;
FIG. 4 is a partially enlarged cross-sectional view of a coating film of a coated metal sheet;
FIG. 5 is a graph of the O1s peak upon analyzing a coating film made in Example 19 with XPS method;
FIG. 6 is a graph of the O1s peak upon analyzing a coating film made in Example 24 with XPS method;
FIG. 7 is a graph indicating the depth profile curve of the composition ratio of a coating film made in Example 19;
FIG. 8 is a graph indicating the depth profile curve of the composition ratio of a coating film made in Example 24;
FIG. 9 is a graph indicating the depth profile curve of the composition ratio of a coating film made in Comparative Example 14; and
FIG. 10 is a graph indicating the depth profile curve of the composition ratio of a coating film made in Comparative Example 17.

### Description of Embodiments

### 1. Method for Producing Coated Metal Sheet

A method for producing a coated metal sheet according to the present invention includes forming a coating film on the surface of a metal sheet by applying and curing a silicone resin-containing coating material (hereinafter also referred to as "coating film formation") and subjecting the coating film to a flame treatment (hereinafter also referred to as "flame treatment").

As mentioned above, it has been conventionally attempted to prevent rain-streak stains that occur on a coated metal sheet by applying a coating material containing organosilicate or the like on the surface of a metal sheet. When applied to the surface of the metal sheet, organosilicate moves to the surface side. It is believed that this organosilicate is then hydrolyzed to produce silanol groups or siloxane bonds, thereby expressing rain-streak stain resistance. However, it may be difficult to uniformly enrich organosilicate on the surface depending on its type, or even if organosilicate is enriched on the surface, it may take time until silanol groups or siloxane bonds are produced. Therefore, it has been difficult to sufficiently enhance rain-streak stain resistance of the coated metal sheet only by applying organosilicate. In addition, it has been difficult to sufficiently enhance hardness of the surface of the coating film when the concentration of organosilicate on the surface of the coating film is not increased uniformly. Furthermore, upon heating and drying a film composed of the coating material, organosilicate tends to be evaporated along with a solvent and adheres to the wall surface of a heating apparatus, thereby producing silica. Then, there has been a problem in that when that silica comes in contact with the film during curing or when silica coming off from the heating apparatus adheres to the film, the appearance of a coated metal sheet to be obtained tends to be poor.

Meanwhile, it has also been examined to subjecting a coating film of a coating material containing organosilicate or the like to a corona treatment, but it has been difficult to uniformly hydrophilize the surface of the coating film with the corona treatment.

In contrast, in the method for producing a coated metal sheet according to the present invention, formation of a coating film by applying a coating material containing a particular silicone resin (containing silanol groups in an amount of 5 to 50mol% relative to the total number of moles of Si atoms) and flame treatment of the coating film are carried out. Here, the "silicone resin" in the present specification refers to a compound in which alkoxysilane is partially hydrolyzed and condensed. This compound mainly has a three dimensional crosslinked structure but does not reach the state of gel, and is a polymer that is soluble in an organic solvent. The three dimensional crosslinked structure that the silicone resin includes is not particularly limited, and for example, it may be any of cage-shaped, ladder-shaped or random shaped. Note that, in the present specification, the silicone resin does not include tetraalkoxysilane or a condensate formed by hydrolyzing and condensing tetraalkoxysilane only (organosilicate).

Since the silicone resin includes a three dimensional crosslinked structure, when the coating material is applied to the surface of the metal sheet, the silicone resin tends to be transferred to the surface side of the film and arranged uniformly along the surface of the film. When such a coating film is subjected to a flame treatment, organic groups (such as methyl groups or phenyl groups) that the silicone resin contains are removed evenly, and silanol groups or siloxane bonds are introduced to the surface of the coating film. As a result, hydrophilicity of the surface of the coated metal sheet is uniformly increased, providing very satisfactory rain-streak stain resistance. In addition, since the silicone resin is arranged uniformly on the surface of the coating film, scratch resistance of the coating film is also satisfactory.

Moreover, the silicone resin contained in the coating material described above contains silanol groups in an amount of 5 to 50mol% relative to the total number of moles of Si atoms in the silicone resin. The silicone resin in which the amount of silanol groups is 5 to 50mol% relative to the total number of moles of Si atoms has appropriate reactivity and is unlikely to be excessively condensed due to moisture contained in the coating material. Therefore, the silicone resin is unlikely to react in the coating material, thereby providing the coating material with very satisfactory storage stability. In addition, since silanol groups are appropriately bonded to other components in the coating material via hydrogen bonding, the silicone resin is unlikely to be evaporated upon curing the film (coating material). Therefore, upon heating and drying the coating material, the heating apparatus is unlikely to be fouled, and furthermore, poor appearance of the coated metal sheet due to silica adhering to the heating apparatus hardly occurs.

Note that the method for producing a coated metal sheet according to the present invention may include a step other than the above-described coating film formation and flame treatment. In the following, each step in the method for producing a coated metal sheet according to the present invention will be described.

### (1) Coating Film Formation

In the coating film formation, a coating material containing a particular silicone resin is applied to a metal sheet and cured, thereby obtaining a coating film. A method for applying the coating material to the surface of the metal sheet is not particularly limited, and it may be appropriately selected from methods known in the art. Examples of the method for applying coating material include roll coating method, curtain flow method, spin coating method, air-spray method, airless-spray method and dip-and-draw up method. Among them, the roll coating method is preferred from the viewpoint where a coating film with a desired thickness is likely to be obtained efficiently.

In addition, a method for curing the coating material is appropriately selected depending on the type of a resin in the coating material and the like, and for example, it may be baking by heating. The temperature during the baking treatment is preferably 120 to 300°C, more preferably 150 to 280°C and further preferably 180 to 260°C from the viewpoint of preventing decomposition of the resin and the like in the coating material and obtaining a homogeneous coating film. The duration for the baking treatment is not particularly limited, and preferably 3 to 90 seconds, more preferably 10 to 70 seconds and further preferably 20 to 60 seconds from the same viewpoint as described above.

In addition, upon the baking of the coating material, wind may be blown such that the wind velocity on the sheet surface is 0.9 m/s or more in order to cure the coating material within a short time. In the coating material mentioned above, the silicone resin is bonded to other components via hydrogen bonding. Therefore, even if the coating material is cured while wind is blown, the silicone resin is unlikely to be evaporated and the heating apparatus is unlikely to be fouled.

Here, the thickness of the coating film formed on the metal sheet is appropriately selected depending on an application of the coated metal sheet and the like, but it is normally in the range of 3 to 30 µm. The thickness is a value determined through gravimetric method from the specific gravity of the baked coating film and the weight difference of the coated metal sheet before and after the removal of the coating film by sandblasting or the like. When the coating film is too thin, durability and concealing properties of the coating film may be insufficient. On the other hand, when the coating film is too thick, production costs are increased and popping may easily occur during the baking.

Here, for the metal sheet to which the coating material is to be applied, any metal sheets generally used as building boards may be used. Examples of such a metal sheet include plated steel sheets such as hot-dip Zn-55% A1 alloy-plated steel sheets; steel sheets such as normal steel sheets and stainless-steel sheets; aluminum sheets; copper sheets; and the like. The metal sheet may have a chemical conversion film, an undercoat coating film or the like formed on its surface as long as it does not hinder the effects of the present invention. Furthermore, the metal sheet may be subjected to a processing for forming irregularities such as embossing and drawing as long as it does not impair the effects of the present invention.

The thickness of the metal sheet is not particularly limited, and is appropriately selected depending on an application of the coated metal sheet. For example, when the coated metal sheet is used for a metal siding material, the thickness of the metal sheet may be 0.15 to 0.5 mm.

Here, the coating material for forming the coating film is only required to at least include a particular silicone resin, but other than the silicone resin, it may include a resin or a curing agent, a resin or a curing agent, inorganic particles, organic particles, a coloring pigment, a solvent or the like.

As mentioned above, the silicone resin is a compound in which alkoxysilane is partially hydrolyzed and condensed, and in its molecular chain, any one or two or more of T-1 unit to T-3 unit, represented by the following general formulas, derived from trialkoxysilane (all of which are also collectively referred to as "T units") are normally included.

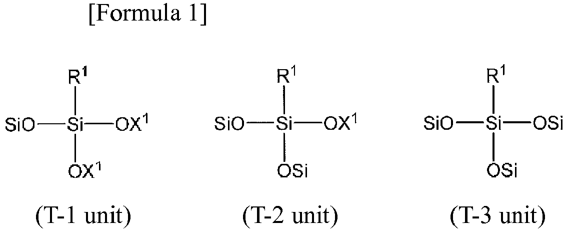

In the general formulas described above, R¹ represents a hydrocarbon group that optionally has a substituent. In addition, X¹ represents a hydrogen atom or a hydrocarbon group. In the silicone resin, multiple types of T units with different types of above-described R¹ and X¹ may be included.

R¹ is preferably a hydrocarbon group having 1 to 12 carbon atoms, and specific examples thereof include alkyl groups such as methyl group, ethyl group, propyl group, hexyl group and octyl group; aryl groups such as phenyl group, tolyl group, xylyl group and naphthyl group; cycloalkyl groups such as cyclohexyl group, cyclobutyl group and cyclopentyl group; and the like. Among them, methyl group and phenyl group are particularly preferred.

Meanwhile, X¹ is preferably a hydrogen atom or a hydrocarbon group having 1 to 8 carbon atoms, and examples of the hydrocarbon group include alkyl groups such as methyl group, ethyl group, propyl group and hexyl group; aryl groups such as phenyl group, tolyl group and xylyl group; cycloalkyl groups such as cyclohexyl group, cyclobutyl group and cyclopentyl group; and the like. Among them, methyl group and ethyl group are particularly preferred.

In addition, in the molecular chain of the silicone resin, either one or both of D-1 unit and D-2 unit, represented by the following general formulas, derived from dialkoxysilane (all of which are also collectively referred to as "D units") may be included.

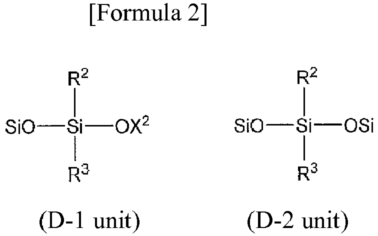

In the general formulas described above, R² and R³ each independently represent a hydrocarbon group that optionally has a substituent. In addition, X² represents a hydrogen atom or a hydrocarbon group. Note that, in the silicone resin, multiple types of D units with different types of above-described R², R³ and X² may be included.

Each of R² and R³ is preferably a hydrocarbon group having 1 to 12 carbon atoms, and specific examples thereof include the same groups as above-mentioned R¹ for T units. Meanwhile, X² is preferably a hydrogen atom or a hydrocarbon group having 1 to 8 carbon atoms, and specific examples thereof include the same groups as above-mentioned X¹ for T units.

Furthermore, in the molecular chain of the silicone resin, any one or two or more of Q-1 unit to Q-4 unit, represented by the following general formulas, derived from tetraalkoxysilane (all of which are also collectively referred to as "Q units") may be included.

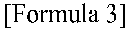

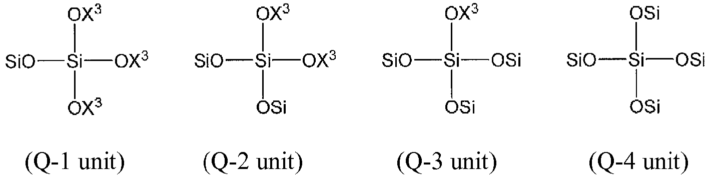

In the general formulas described above, X³ represents a hydrogen atom or a hydrocarbon group. Note that, in the silicone resin, multiple types of Q units with different types of above-described X³ may be included.

X³ is preferably a hydrogen atom or a hydrocarbon group having 1 to 8 carbon atoms, and specific examples thereof include the same groups as above-mentioned X¹ for T units.

The silicone resin has a structure in which the above-described T units, D units and/or Q units are bonded in a three dimensional manner. As mentioned above, the amount (number of moles) of silanol groups in the silicone resin is 5 to 50mol% and more preferably 15 to 40mol% relative to the total number of moles of Si atoms. When the amount of silanol groups is greater than 50mol% relative to the total number of moles of Si atoms, the reactivity of the silicone resin may be increased and the storage stability of the coating material may be lowered. On the other hand, when the amount of silanol groups is less than 5mol% relative to the total number of moles of Si atoms, the silicone resin is unlikely to be bonded to other components in the coating material (such as an epoxy resin) via hydrogen bonding, and the silicone resin is likely to be evaporated upon curing the coating material. Furthermore, when the amount of silanol groups is less than 5mol%, the silicone resin is unlikely to be sufficiently crosslinked upon curing the coating material, and the scratch resistance of the coating film may not be enhanced sufficiently.

In contrast, when the amount of silanol groups in the silicone resin is in the range described above, not only the storage stability of the coating material is enhanced, but also the silicone resin is unlikely to be evaporated upon curing the film composed of the coating material, as mentioned above. Furthermore, the scratch resistance of the coating film composed of the coating material becomes satisfactory.

The number of moles of Si contained in the silicone resin and the amount of silanol groups contained in the silicone resin can be specified through analysis with ²⁹Si-NMR and analysis with ¹H-NMR. In addition, the amount of silanol groups in the silicone resin can be adjusted through the charging ratio of T units, D units and Q units, or the degree of condensation reaction. For example, when trialkoxysilane is used to prepare a silicone resin, by prolonging the duration for condensation reaction or the like, the amount of T-3 unit is increased and the amount of silanol groups is decreased.

Moreover, the silicone resin contains Si atoms derived from trialkoxysilane, that is, Si atoms constituting T units preferably in an amount of 50 to 100mol% and more preferably in an amount of 60 to 100mol% relative to the total number of moles of Si atoms that the silicone resin contains. When the amount of T units is less than 50mol% (in particular, when the amount of D units is greater than 50mol%), the silicone resin tends to form a micelle structure and the silicone resin is likely to be enriched in the form of sea-island on the surface of the coating film. As a result, it is hard to uniformly enhance hydrophilicity or hardness of the surface of the coating film, and unevenness in scratch resistance or rain-streak stain resistance of the coating film is likely to occur. Note that whether the silicone resin is enriched in the form of sea-island on the surface of the coating film or not can be confirmed by analyzing the surface of the coating film after the flame treatment with an AFM (atomic force microscope). For example, the etching depth through the flame treatment in the sea part is different from that in the island part on the surface of the coating film. Accordingly, the sea-island distribution of the silicone resin can be confirmed through irregularities on the surface of the coating film.

In contrast, when the amount of T units is 50mol% or more, the silicone resin is unlikely to form a micelle structure and the silicone resin is likely to be enriched uniformly on the surface of the coating film. As a result, the rain-streak stain resistance of a coated metal sheet to be obtained becomes satisfactory, or scratch resistance of the coating film becomes satisfactory. The proportion of Si atoms constituting T units can be specified through analysis with ²⁹Si-NMR.

In addition, the proportion of the number of moles of aryl groups directly bonded to Si atoms of the silicone resin based on the number of moles of alkyl groups directly bonded to Si atoms of the silicone resin, that is, the proportion of aryl groups/alkyl groups is preferably 20 to 80% and more preferably 30 to 70%. When the molar ratio of aryl groups is increased, the silicone resin is more likely to be dissolved in other components in the coating material. However, when the proportion of aryl groups becomes excessive, the reaction speed upon formation of the coating film is decreased significantly, and it may be hard to obtain a sufficient crosslinking density. The above-described ratio of alkyl groups and aryl groups can be specified through analysis with ¹H-NMR.

Here, the weight average molecular weight of the silicone resin is preferably 700 to 50,000 and more preferably 1,000 to 10,000. When the weight average molecular weight of the silicone resin is less than 700, the silicone resin is likely to be evaporated upon curing the film composed of the coating material, and therefore, the heating apparatus may be fouled or the concentration of the silicone resin on the surface of the coating film may become small. On the other hand, when the weight average molecular weight is greater than 50,000, the viscosity of the coating material is likely to be increased and the storage stability is lowered. Note that the above-described weight average molecular weight of the silicone resin is in terms of polystyrene, measured by gel permeation chromatography (GPC).

The coating material contains the silicone resin preferably in an amount of 1 to 10 parts by mass, more preferably in an amount of 2 to 7 parts by mass, further preferably in an amount of 2 to 6 parts by mass, and further preferably in an amount of 3 to 6 parts by mass relative to 100 parts by mass of the solid content of the coating material. When the coating material contains the silicone resin in an amount within the range described above, hydrophilicity of the surface of a coating film to be obtained can be enhanced sufficiently and rain-streak stains are unlikely to occur. In addition, hardness of the surface of the coating film is also increased.

The silicone resin mentioned above can be prepared through hydrolytic polymerization of trialkoxysilane or the like. Specifically, alkoxysilane such as trialkoxysilane or a partial condensate thereof is dispersed in water or a solvent such as an alcohol. Then, the pH of that dispersion is preferably adjusted to 1 to 7, and more preferably to 2 to 6, and alkoxysilane or the like is hydrolyzed. Subsequently, the hydrolysate is subjected to dehydrative condensation for a certain duration on its own. As a result of this, a silicone resin is obtained. The molecular weight or the like of a silicone resin to be obtained can be adjusted through the duration of dehydrative condensation or the like. In addition, the condensation of the hydrolysate can be carried out in succession with the above-described hydrolysis, and the condensation reaction can be accelerated by evaporating an alcohol produced through the hydrolysis or water.

Note that alkoxysilane used for preparation of the silicone resin is appropriately selected depending on a desired structure of the silicone resin. Examples of the trialkoxysilane compound include methyltrimethoxysilane, methyltriethoxysilane, methyltriisopropoxysilane, methyltributoxysilane, ethyltrimethoxysilane, ethyltriethoxysilane, ethyltriisopropoxysilane, propyltrimethoxysilane, propyltriethoxysilane, propyltriisopropoxysilane, butyltrimethoxysilane, hexyltrimethoxysilane, decyltrimethoxysilane, octadecyltrimethoxysilane, phenyltrimethoxysilane, phenyltriethoxysilane, methyltrisilanol, phenyltrisilanol and the like.

Examples of dialkoxysilane include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, diphenyldimethoxysilane and the like.

Furthermore, examples of tetraalkoxysilane include tetramethoxysilane, tetraethoxysilane, tetraisopropoxysilane, tetrabutoxysilane, tetramethoxysilane and the like.

Note that, upon preparation of the silicone resin, partial condensates of the above-described trialkoxysilane, dialkoxysilane and tetramethoxysilane may be used as a raw material.

On the other hand, the resin contained in the coating material may be any resin as long as it is a component that can be a binder for the coating film. Examples of the resin include polymeric compounds such as polyester resins, polyester urethane resins, amino-polyester resins, acrylic resins, acrylic urethane resins, amino-acrylic resins, poly(vinylidene fluoride) resins, polyurethane resins, epoxy resins, polyvinyl alcohol resins, phenol resins and fluororesins. Among them, polyester resins, polyester urethane resins, amino-polyester resins, acrylic resins, acrylic urethane resins, amino-acrylic resins and poly(vinylidene fluoride) resins are preferred for their high resistance to stain adhesion. In particular, polyester resins and acrylic resins are preferred for their high weather resistance.

The polyester resin may be any resin known in the art prepared by the polycondensation of a polyvalent carboxylic acid and a polyhydric alcohol. Examples of the polyvalent carboxylic acid include aromatic dicarboxylic acids such as terephthalic acid, isophthalic acid, phthalic acid, 2,6-naphthalenedicarboxylic acid and 2,7-naphthalenedicarboxylic acid, and anhydrides thereof; aliphatic dicarboxylic acids such as succinic acid, adipic acid, azelaic acid, sebacic acid, dodecanedicarboxylic acid and 1,4-cyclohexanedicarboxylic acid, and anhydrides thereof; lactones such as γ-butyrolactone and ε-caprolactone; polyvalent carboxylic acids having a valency of 3 or more such as trimellitic acid, trimesic acid and pyromellitic acid; and the like. The polyester resin may include only one structure or two or more structures derived from the polyvalent carboxylic acid described above.

Examples of the polyhydric alcohol include glycols such as ethylene glycol, 1,2-propanediol, 1,3-propanediol, 1,2-butanediol, 1,3-butanediol, 1,4-butanediol, 1,2-pentanediol, 1,4-pentanediol, 1,5-pentanediol, 2,3-pentanediol, 1,4-hexanediol, 2,5-hexanediol, 1,5-hexanediol, 3-methyl-1,5-pentanediol, diethylene glycol, triethylene glycol, 1,2-dodecanediol, 1,2-octadecanediol, neopentyl glycol, 1,4-cyclohexanediol, 1,4-cyclohexanedimethanol, bisphenol A alkylene oxide adducts and bisphenol S alkylene oxide adducts; polyhydric alcohols having a valency of 3 or more such as trimethylolpropane, glycerin and pentaerythritol; and the like. The polyester resin may include only one structure or two or more structures derived from the polyhydric alcohol described above.

When the resin described above is a polyester resin, the number average molecular weight thereof (in terms of polystyrene) measured by GPC is preferably 2,000 to 8,000. When the number average molecular weight is less than 2,000, the processability of the coated metal sheet may be reduced, thereby possibly generating cracks of the coating film. In addition, when the number average molecular weight is greater than 8,000, the crosslinking density of the obtained coating film is reduced. Therefore, the weather resistance of the coating film may be reduced. In view of the balance between processability and weather resistance, the number average molecular weight is particularly preferably 3,000 to 6,000.

On the other hand, the acrylic resin may be any resin that contains a (meth)acrylate ester as a monomer component, and may contain other monomer components as a part thereof in addition to the (meth)acrylate ester. In the present specification, (meth)acrylate refers to acrylate or methacrylate. Examples of the monomer component constituting the acrylic resin include (meth)acrylate esters and cycloalkyl (meth)acrylate esters having an ester group having 1 to 18 carbon atoms such as methyl (meth)acrylate, ethyl (meth)acrylate, n-propyl (meth)acrylate, isopropyl (meth)acrylate, n-, i- or t-butyl (meth)acrylate, hexyl (meth)acrylate, 2-ethylhexyl (meth)acrylate, n-octyl (meth)acrylate, decyl (meth)acrylate, laulyl (meth)acrylate and cyclohexyl (meth)acrylate; (meth)acrylic hydroxy esters having a hydroxyalkyl ester group having 2 to 8 carbon atoms such as 2-hydroxyethyl (meth)acrylate, 2-hydroxypropyl (meth)acrylate, 3-hydroxypropyl (meth)acrylate and hydroxybutyl (meth)acrylate; N-substituted (meth)acrylamide monomers such as N-methylol (meth)acrylamide, N-butoxymethyl (meth)acrylamide and N-methoxymethyl (meth)acrylamide; aromatic vinyl monomers such as styrene, vinyltoluene, 2-methylstyrene, t-butylstyrene and chlorostyrene; (meth)acrylic acid; glycidyl (meth)acrylate; and the like. The acrylic resin may include only one of these monomer components or two or more of them.

When the resin described above is an acrylic resin, the number average molecular weight thereof (in terms of polystyrene) measured by GPC is not particularly limited, but from the viewpoint of obtaining a coating film excellent in hardness and weather resistance, the number average molecular weight is preferably 1,000 to 200,000, more preferably 5,000 to 100,000, and further preferably 10,000 to 50,000.

The amount of the resin contained in the coating material is appropriately selected depending on an application of the coating material or the type of the resin. From the viewpoint of the strength of a coating film to be obtained, the coating material contains the resin described above preferably in an amount of 25 to 60 parts by mass and more preferably in an amount of 30 to 50 parts by mass relative to 100 parts by mass of the solid content of the coating material.

On the other hand, the coating material may contain a curing agent. The curing agent is a component for adjusting the nature, physical properties (for example, the surface hardness and durability of the coating film) and the like of the coating film, and one example of the curing agent is a compound capable of crosslinking the resin described above. The curing agent is appropriately selected depending on the type of the resin. For example, when the resin described above is a polyester resin, the curing agent is preferably a melamine curing agent. Examples of the melamine curing agent include methylated melamine resin curing agents such as methylol melamine methyl ether; n-butylated melamine resin curing agents such as methylol melamine butyl ether; methyl/n-butyl mixed etherified melamine resin curing agents; and the like.

The amount of the curing agent contained in the coating material is appropriately selected depending on an application of the coating material or the type of the resin. The coating material contains the curing agent described above preferably in an amount of 5 to 20 parts by mass and more preferably in an amount of 7 to 15 parts by mass relative to 100 parts by mass of the resin described above. When the amount of the curing agent is within the range described above, the curability of a coating film to be obtained from the coating is satisfactory.

In addition, the coating material may contain inorganic particles or organic particles. When the coating material contains them, it becomes easier to adjust the surface roughness of a coating film to be obtained or the like. Here, the average particle diameter of inorganic particles or organic particles is preferably 4 to 80 µm and more preferably 10 to 60 µm. The average particle diameter of inorganic particles or organic particles is a value measured by coulter counter method. Note that the shape of inorganic particles or organic particles is not particularly limited, but from the viewpoint where it is easy to adjust the surface condition of a coating film to be obtained, the shape is preferably generally spherical.

Examples of inorganic particles include silica, barium sulfate, talc, calcium carbonate, mica, glass beads and glass flakes. Examples of organic particles include resin beads composed of an acrylic resin or a polyacrylonitrile resin. Those resin beads may be produced using methods known in the art, or may be commercial products. Examples of commercially available acrylic resin beads include "TAFTIC AR650S (average particle diameter 18 µm)," "TAFTIC AR650M (average particle diameter 30 µm)," "TAFTIC AR650MX (average particle diameter 40 µm)," "TAFTIC AR650MZ (average particle diameter 60 µm)" and "TAFTIC AR650ML (average particle diameter 80 µm)," all of which are manufactured by TOYOBO CO., LTD. Examples of commercially available polyacrylonitrile resin beads include "TAFTIC A-20 (average particle diameter 24 µm)," "TAFTIC YK-30 (average particle diameter 33 µm)," "TAFTIC YK-50 (average particle diameter 50 µm)" and "TAFTIC YK-80 (average particle diameter 80 µm)," all of which are manufactured by TOYOBO CO., LTD.

The amount of inorganic particles and/or organic particles contained in the coating material is appropriately selected depending on a desired surface condition of the coating film or the like. Normally, the total amount of inorganic particles and/or organic particles may be 1 to 40 parts by mass relative to 100 parts by mass of the solid content of the coating material.

In addition, the coating material may further contain a coloring pigment as necessary. The average particle diameter of the coloring pigment may be, for example, 0.2 to 2.0 µm. Examples of the coloring pigment include titanium oxide, iron oxide, yellow oxide of iron, phthalocyanine blue, carbon black and cobalt blue. When the coating material contains a coloring pigment, the amount thereof is preferably 20 to 60 parts by mass and more preferably 30 to 55 parts by mass relative to 100 parts by mass of the solid content of the coating material.

In addition, the coating material may contain an organic solvent as necessary. The organic solvent is not particularly limited as long as it can sufficiently dissolve or disperse the above-described silicone resin or resin, curing agent, inorganic particles, organic particles and the like. Examples of the organic solvent include hydrocarbon solvents such as toluene, xylene, Solvesso (R) 100 (trade name; manufactured by ExxonMobil Chemical), Solvesso

(R) 150 (trade name; manufactured by ExxonMobil Chemical) and Solvesso (R) 200 (trade name; manufactured by ExxonMobil Chemical); ketone solvents such as methyl ethyl ketone, methyl isobutyl ketone, cyclohexanone and isophorone; ester solvents such as ethyl acetate, butyl acetate and ethylene glycol monoethyl ether acetate; alcohol solvents such as methanol, isopropyl alcohol and n-butyl alcohol; ether alcohol solvents such as ethylene glycol monoethyl ether and diethylene glycol monobutyl ether; and the like. The coating material may include only one of these or two or more of them. Among them, xylene, Solvesso (R) 100, Solvesso (R) 150, cyclohexanone and n-butyl alcohol are preferred from the compatibility with the resin or the like.

A method for preparing the coating material described above is not particularly limited. The coating material may be prepared by mixing the above materials, followed by stirring or dispersing the same, in the same manner as coating materials known in the art. Note that the silicone resin may be premixed with other components. Alternatively, materials other than the silicone resin may be premixed and the silicone resin may be mixed in later.

### (2) Flame Treatment

After forming the coating film described above, the coating film described above is subjected to a flame treatment. As a result of this, hydrocarbon groups (such as methyl groups or phenyl groups) of the silicone resin, enriched on the surface of the coating film, are decomposed and silanol groups or siloxane bonds are produced, thereby enhancing hydrophilicity of the surface of the coating film.

The flame treatment may be, for example, a method in which a metal sheet having a coating film formed thereon is placed on a carrier such as a belt conveyor, and while the metal sheet is moved in a certain direction, flame is projected onto the coating film with a burner for flame treatment.

Here, the amount of flame treatment is preferably 30 to 1,000 kJ/m² and more preferably 100 to 600 kJ/m². Note that the "amount of flame treatment" in the present specification refers to the amount of heat per unit area of a coated metal sheet, which is calculated on the basis of the amount supplied of a combustion gas such as LP gas. The amount of flame treatment can be adjusted according to the distance between the burner head of the burner for flame treatment and the surface of the coating film, the conveying speed of the coating film, and the like. When the amount of flame treatment is less than 30 kJ/m², uneven treatment may occur and it is difficult to evenly hydrophilize the surface of the coating film. On the other hand, when the amount of flame treatment is greater than 1,000 kJ/m², the coating film may be oxidized and turn yellow.

Hereinafter, one example of a burner for flame treatment that can be used in the flame treatment of the present invention will be described; however, the flame treatment method is not limited thereto.

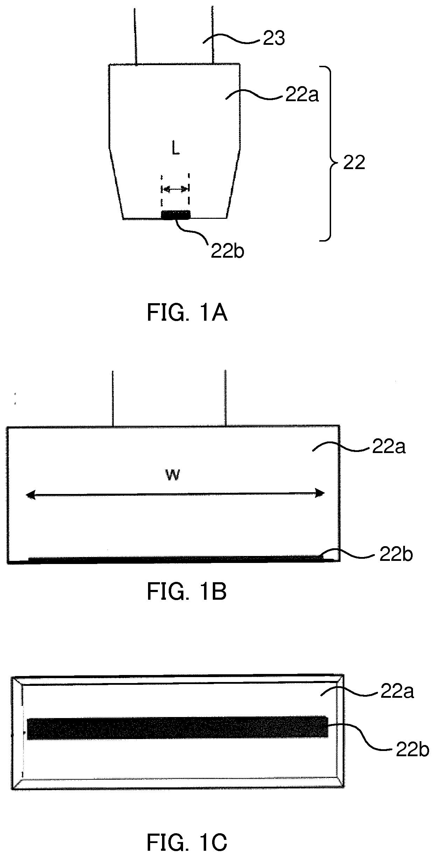

The burner for flame treatment has a gas supply pipe for supplying a combustible gas; a burner head for burning the combustible gas supplied from the gas supply pipe; and a support member for supporting them. FIGS. 1A, 1B and 1C schematically illustrate the burner head of the burner for flame treatment. FIG. 1A is a side view of the burner head, FIG. 1B is a front view of that burner head, and FIG. 1C is a bottom view of that burner head. For convenience sake, a part corresponding to burner port 22b is emphasized by illustrating with a thick line in FIGS. 1A and 1B; however, actually, burner port 22b cannot be seen from the side or the front.

Burner head 22 has housing 22a having the shape of a generally square pole, connected to gas supply pipe 23; and burner port 22b disposed on the underside of the housing. Burner head 22 burns combustible gas supplied from gas supply pipe 23 at burner port 22b.

The structure inside housing 22a of burner head 22 may be the same as the structure of a common burner for flame treatment, and may have, for example, a channel formed therein for allowing the combustible gas supplied from gas supply pipe 23 to flow toward burner port 22b. In addition, the width of housing 22a in a front view is appropriately selected depending on the width of a coating film to be subjected to the flame treatment. Moreover, the width of housing 22a in a side view is appropriately selected depending on the width of burner port 22b in the conveyance direction of the coating film (represented by L in FIG. 1A).

Meanwhile, burner port 22b is a through hole provided in the underside of housing 22a. The shape of burner port 22b is not particularly limited, and it may have any shape such as a rectangular or circular shape. However, from the viewpoint of carrying out the flame treatment uniformly in the width direction of the coating film, a rectangular shape is particularly preferred. In addition, the width of burner port 22b in the direction perpendicular to the conveyance direction of the coating film (represented by W in FIG. 1B) may be the same as or longer than the width of the coating film to be subjected to the flame treatment, and, for example, it may be about 60 to 150 cm. On the other hand, the width of burner port 22b in the conveyance direction of the coating film (represented by L in FIG. 1A) can be appropriately set depending on the discharge stability of the combustible gas or the like, and it may be about 1 to 8 mm.

Gas supply pipe 23 is a gas channel, one end of which is connected to burner head 22 and the other end of which is connected to a gas mixing section (not illustrated). The gas mixing section is connected to a combustion gas source (not illustrated) such as a combustion gas cylinder, and to a combustion-assisting gas source (not illustrated) such as an air cylinder, an oxygen cylinder, compressed air or air by a blower. The gas mixing section is a member for mixing the combustion gas and the combustion-assisting gas in advance. Note that the concentration of oxygen in the combustible gas (mixed gas of the combustion gas and the combustion-assisting gas) supplied from the gas mixing section to gas supply pipe 23 is preferably at a constant level, and the gas mixing section preferably has an oxygen feeder for supplying oxygen to gas supply pipe 23 as necessary.

Examples of the combustion gas described above include hydrogen, liquefied petroleum gas (LPG), liquefied natural gas (LNG), acetylene gas, propane gas and butane. Among them, from the viewpoint of easiness of forming a desired flame, LPG or LNG is preferred, and LPG is particularly preferred. On the other hand, examples of the combustion-assisting gas include air and oxygen, and the air is preferred due to the aspect of handleability.

The mixing ratio between the combustion gas and the combustion-assisting gas in the combustible gas supplied to burner head 22 via gas supply pipe 23 can be appropriately set depending on the types of the combustion gas and the combustion-assisting gas. For example, when the combustion gas is LPG and the combustion-assisting gas is air, the volume of the air is preferably 24 to 27, more preferably 25 to 26 and further preferably 25 to 25.5 relative to one volume of LPG. Alternatively, when the combustion gas is LNG and the combustion-assisting gas is air, the volume of the air is preferably 9.5 to 11, more preferably 9.8 to 10.5 and further preferably 10 to 10.2 relative to one volume of LNG.

In the burner for flame treatment, the flame treatment of a coating film is performed while the coating film is moved. The flame treatment described above can be carried out by, while discharging the combustible gas from burner port 22b of burner head 22 toward the coating film, burning the combustible gas. The distance between burner head 22 and the coating film is appropriately selected depending on the amount of flame treatment as mentioned above, but it may be normally about 10 to 120 mm, preferably 25 to 100 mm and more preferably 30 to 90 mm. When the distance between the burner head and the coating film is too small, the coating film may be brought into contact with the burner head due to a warp or the like of the metal sheet. On the other hand, when the distance between the burner head and the coating film is too large, a large amount of energy is required for the flame treatment. Note that, during the flame treatment, flame may be projected perpendicular to the surface of the coating film from the burner for flame treatment, but the flame may also be projected toward the surface of the coating film from the burner for flame treatment such that a certain angle is formed relative to the surface of the coating film.

In addition, the moving speed of the coating film is appropriately selected depending on the amount of flame treatment mentioned above, but normally, it is preferably 5 to 120 m/min, more preferably 10 to 80 m/min, and further preferably 20 to 60 m/min. By moving the coating film at a speed of 5 m/min or more, the flame treatment can be carried out efficiently. On the other hand, when the moving speed of the coating film is too fast, the movement of the coating film is likely to cause an air current to occur, thereby resulting in an insufficient flame treatment.

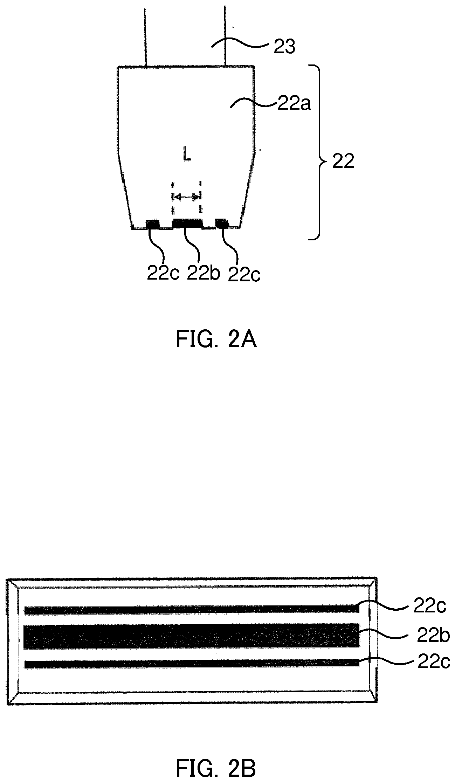

Note that, in the above description, burner head 22 has only one burner port 22b in housing 22a; however, the structure of burner head 22 is not limited thereto. For example, as illustrated in FIGS. 2A and 2B, burner head 22 may have auxiliary burner port 22c parallel to burner port 22b. FIG. 2A is a side view of such a burner head, and FIG. 2B is a bottom view of that burner head. For convenience sake, parts corresponding to burner port 22b and auxiliary burner port 22c are emphasized by illustrating with a thick line in FIG. 2A; however, actually, burner port 22b and auxiliary burner port 22c cannot be seen from the side or the front. Here, the spacing between burner port 22b and auxiliary burner port 22c is preferably 2 mm or more, and may be, for example, 2 mm to 7 mm. In this instance, housing 22a has a structure such that a very small amount of combustible gas passes through auxiliary burner port 22c. The amount of the combustible gas discharged from auxiliary burner port 22c is preferably 5% or less and more preferably 3% or less relative to the amount of the combustible gas discharged from burner port 22b. The flame generated at auxiliary burner port 22c exerts little influence on the surface treatment of the coating film, but the presence of auxiliary burner port 22c increases the rectilinearity of the combustible gas discharged from burner port 22b, thereby forming a steadier flame.

Moreover, prior to the flame treatment mentioned above, a preheating treatment for heating the surface of the coating film to 40°C or higher may be carried out. When a flame is applied to a coating film formed on the surface of a metal sheet having a high thermal conductivity (for example, a metal sheet having a thermal conductivity of 10 W/mK or more), water vapor generated by the combustion of the combustible gas is cooled and becomes water, which temporarily stays on the surface of the coating film. Then, that water may absorb energy upon the flame treatment to become water vapor, thereby inhibiting the flame treatment. Responding to this, by heating the surface of the coating film (metal sheet) in advance, the generation of water upon the application of flame can be suppressed.

A method for preheating the coating film is not particularly limited, and a heating apparatus generally referred to as a drying oven may be used. For example, a batch-type drying oven (also referred to as a "safe-type oven") may be used. Specific examples thereof include a low temperature-thermostat manufactured by Isuzu Seisakusho Co., Ltd (Model: Mini-Katarina MRLV-11), an automatic ejection dryer manufactured by Tojo Netsugaku Co., Ltd (Model: ATO-101) and a simple dryer having an explosion-proof specification manufactured by Tojo Netsugaku Co., Ltd (Model: TNAT-1000).

As described above, according to the method for producing a coated metal sheet of the present invention, the silicone resin can be enriched on the surface of the coating film without unevenness, and hydrophilicity can be enhanced uniformly. In addition, according to the method for producing a coated metal sheet of the present invention, the heating apparatus is unlikely to be fouled and the appearance of a coated metal sheet to be obtained tends to be satisfactory. Therefore, according to the present invention, a coated metal sheet that is applicable to exterior building materials for various buildings and the like and is less likely to suffer the occurrence of rain-streak stains can be produced efficiently.

### 2. Coated Metal Sheet

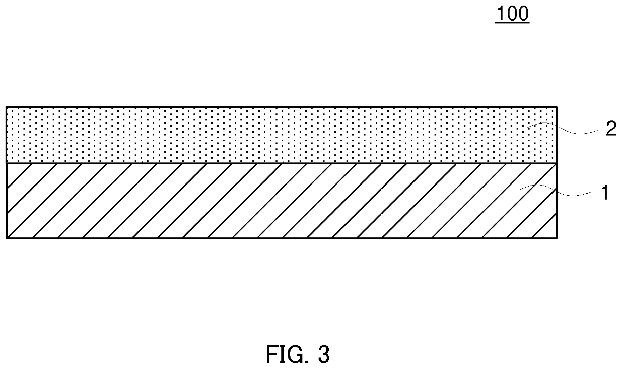

As illustrated in FIG. 3, coated metal sheet 100 according to the present invention has metal sheet 1 and coating film 2 formed on that metal sheet 1 and containing a cured product of a silicone resin, which will be described below. That coated metal sheet 100 can be produced through the above-mentioned method for producing a coated metal sheet.

As mentioned above, the silicone resin includes a three dimensional crosslinked structure. Therefore, as described in the above-mentioned method for producing a coated metal sheet, when a coating material containing the silicone resin is applied to the surface of metal sheet 1, the silicone resin tends to be arranged uniformly along the surface of the film. Then, when a hydrophilization treatment (flame treatment) is carried out on a cured film of the silicone resin, organic groups that the surface of the cured film contains are removed evenly, and silanol groups or siloxane bonds are introduced. As a result, hydrophilicity of the surface of coated metal sheet 100 (the surface of coating film 2) is uniformly increased, providing very satisfactory rain-streak stain resistance. In addition, in that coating film 2, a cured product of the silicone resin is arranged uniformly on the surface, and thus, the scratch resistance of coated metal sheet 100 is high. Furthermore, the amount of a cured product of the silicone resin contained inside of that coating film 2 is small, and the flexibility of the inside of coating film 2 (the side of metal sheet 1) is high. Therefore, the bending processability of coated metal sheet 100 is satisfactory.

Here, coating film 2 made as described above exhibits values as described below when the surface thereof is analyzed with X-ray electron spectroscopy (hereinafter also referred to as XPS method). In the first place, when the surface of the coating film is measured with XPS method using an AlKα ray as an X-ray source, Siₐ, the proportion of Si atoms based on the total amount of Si atoms, N atoms, C atoms, O atoms and Ti atoms, is 8atm% or more. Siₐ is more preferably 10atm% or more and further preferably 14atm% or more. Siₐ is proportional to the amount of enrichment of the silicone resin to the surface of the coating film, and when Siₐ is 8atm% or more, scratch resistance of the coating film is increased. In addition, when Siₐ becomes bigger, the amount of a structure derived from the silicone resin inside the coating film is relatively decreased, and when Siₐ is 8atm% or more, bending processability of the coated metal sheet is also increased.

Moreover, when x is defined to be the ratio of the amount of O atoms to the amount of C atoms upon the above-described measurement with XPS method (the amount of O atoms/the amount of C atoms), x is 0.8 or more. x is more preferably 1.0 or more and further preferably 1.4 or more. x represents the ratio of the amount of O atoms derived from siloxane bonds or silanol groups to the amount of C atoms derived from organic groups present on the surface of the coating film. That is, when the flame treatment mentioned above removes organic groups derived from the silicone resin and siloxane bonds or silanol groups are introduced, x becomes larger. Then, when x is 0.8 or more, hydrophilicity of the surface of the coating film (rain-streak stain resistance of the coated metal sheet) becomes particularly satisfactory.

In addition, when the C1s peak top in an X-ray electron spectroscopic spectrum obtained upon the above-described analysis of the surface of the coating film with XPS method is corrected to be 285 eV and a Si₂ₚ spectrum is separated into a peak corresponding to 103.5 eV and a peak corresponding to 102.7 eV, y is 0.6 or more, wherein y is the ratio of the peak area of 103.5 eV, Si_{inorganic}, to the peak area of the entire Si₂ₚ spectrum, Si₂ₚ (Si_{inorganic}/Si₂ₚ). y is more preferably 0.7 or more and more preferably 0.8 or more.

The Si₂ₚ spectrum is a spectrum observed in the vicinity of 101 to 106 eV when the C1s peak top in the X-ray electron spectroscopic spectrum is corrected to be 285 eV, and it includes both of a peak of the entire Si atoms, that is, a peak of organic Si atoms to which carbon is bonded (102.7 eV) and a peak of inorganic Si atoms to which oxygen is bonded (constituting siloxane bonds or silanol groups) (103.5 eV). That is, y represents the ratio of inorganic Si atoms (Si atoms constituting siloxane bonds or silanol groups) to the total amount of Si on the surface of the coating film, and when Si_{inorganic}/Si₂ₚ is 0.6 or more, hydrophilicity of the surface of the coating film (rain-streak stain resistance of the coated metal sheet) becomes particularly satisfactory.

Here, the analysis of the composition on the surface of the coating film with XPS method (the amounts of Si atoms, N atoms, C atoms, O atoms and Ti atoms) may be the same as a common analysis with XPS method using AlKα as an X-ray source, but for example, it can be carried out with the following measuring apparatus and measurement conditions.

### (Measuring Apparatus and Measurement Conditions)

Measuring apparatus: scanning X-ray photoelectron spectroscopy apparatus, AXIS-NOVA manufactured by Kratos Analytical, Ltd.
X-ray source: AlKα (1,486.6 eV)
Analysis region: 700 x 300 µm

In addition, examples of the above-mentioned method for separating a Si₂ₚ spectrum into a peak corresponding to 103.5 eV and a peak corresponding to 102.7 eV include a method as described below. At first, the C1s peak top of the X-ray electron spectroscopic spectrum is corrected to be 285 eV. Subsequently, the Si₂ₚ spectrum observed in the vicinity of 101 to 106 eV is subjected to background subtraction with Linear method. Then, the spectrum that has been subjected to the background subtraction is treated with a complex function of Gaussian function and Lorentz function, and the spectrum is separated into the peak of organic Si atoms (102.7 eV) and the peak of inorganic Si atoms (103.5 eV).

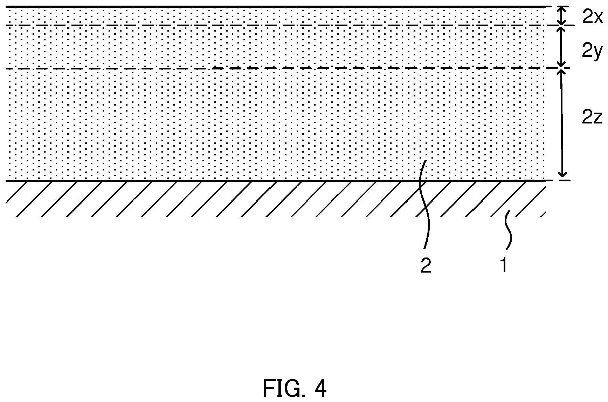

Here, when the above-described coating film is measured with the above-described XPS method, it is also preferable for the coating film to exhibit values as described below. FIG. 4 illustrates a partially enlarged cross-sectional view of coating film 2 of a coated metal sheet. Hereinafter, a region having a depth of 0 nm or more and less than 10 nm from the surface of coating film 2 toward metal sheet 1 is defined to be outermost layer 2x of coating film 2; a region having a depth of 10 nm or more and less than 100 nm from the surface of coating film 2 toward metal sheet 1 is defined to be surface layer 2y of coating film 2; and a region having a depth of 100 nm or more from the surface of coating film 2 toward metal sheet 1 is defined to be main body layer 2z of coating film 2. Then, when Siₓ is defined to be the proportion of Si atoms based on the total amount of Si atoms, N atoms, C atoms, O atoms and Ti atoms in the outermost layer 2x upon the above-mentioned measurement with XPS method, Siₓ is 8atm% or more, preferably 10atm% or more and 35atm% or less, and more preferably 15atm% or more and 30atm% or less.

When Siₓ, showing the content proportion of Si atoms in outermost layer 2x, is 8atm% or more, that is, when the silicone resin is enriched on the side of outermost layer 2, surface hardness of the coating film is increased. Note that, when coating film 2 contains a cured product of methyl silicate instead of a cured product of the silicone resin, the value of Siₓ is normally smaller than 8atm% because methyl silicate is unlikely to be enriched on the surface.

In addition, in this coating film 2, each of αₓ, α_{y} and α_{z} satisfies the following formulas upon the measurement with XPS method using an AlKα ray as an X-ray source, where αₓ is defined to be the ratio of the amount of O atoms to the amount of C atoms in outermost layer 2x; α_{y} is defined to be the ratio of the amount of O atoms to the amount of C atoms in surface layer 2y; and α_{z} is defined to be the ratio of the amount of O atoms to the amount of C atoms in main body layer 2z.
αₓ ≥ 0.8
α_{×} > α_{z} > α_{y}

When both of αₓ ≥ 0.8 and αₓ > α_{z} > α_{y} are satisfied, it represents that the surface of coating film 2 has been subjected to a flame treatment (hydrophilization treatment), that is, hydrophilicity of the surface of coating film 2 is high. Then, when these are satisfied, the rain-streak stain resistance of coated metal sheet 100 is very much increased. Note that above-described αₓ is preferably 1.2 to 3.0 and more preferably 1.5 to 2.5. In addition, α_{y} is more preferably 0.07 to 0.25 and further preferably 0.10 to 0.20. Moreover, α_{z} is more preferably 0.3 to 0.6 and further preferably 0.35 to 0.5.

Hereinafter, the reason why both of αₓ ≥ 0.8 and αₓ > α_{y} > α_{z} are satisfied when the surface of coating film 2 is subjected to a flame treatment (hydrophilization treatment) will be described. As mentioned above, when a coating material containing the silicone resin is applied to the surface of metal sheet 1, the silicone resin is transferred to the surface of the film and arranged uniformly along the surface of the film. Therefore, in the coating film containing a cured product of the silicone resin, outermost layer 2x normally contains organic groups derived from the silicone resin in a large amount, and the concentration of C descends in the order from outermost layer 2x, surface layer 2y to main body layer 2z. However, in this state, αₓ, the ratio of the amount of O atoms to the amount of C atoms (hereinafter also referred to as the "O/C ratio") in outermost layer 2x, is normally smaller than 0.8. In contrast, when the film containing a cured product of the silicone resin is subjected to a flame treatment (hydrophilization treatment), organic groups bonded to Si atoms of the silicone resin in outermost layer 2x are decomposed, and OH groups or the like may be introduced or siloxane bonds may be produced. Accordingly, the concentration of C declines and the concentration of O rises in outermost layer 2x. That is, the O/C ratio in outermost layer 2x becomes very large and reaches 0.8 or more. On the other hand, surface layer 2y and main body layer 2z are unlikely to be influenced by the flame treatment (hydrophilization treatment), and the concentrations of O atoms and C atoms do not change. Then, when they are compared, the O/C ratio in surface layer 2y is smaller than that in main body layer 2z because surface layer 2y has a high concentration of C atoms and main body layer 2z has a low concentration of C atoms, and the minimum value of the O/C ratio is observed in surface layer 2y. Therefore, αₓ > α_{z} > α_{y} is achieved.

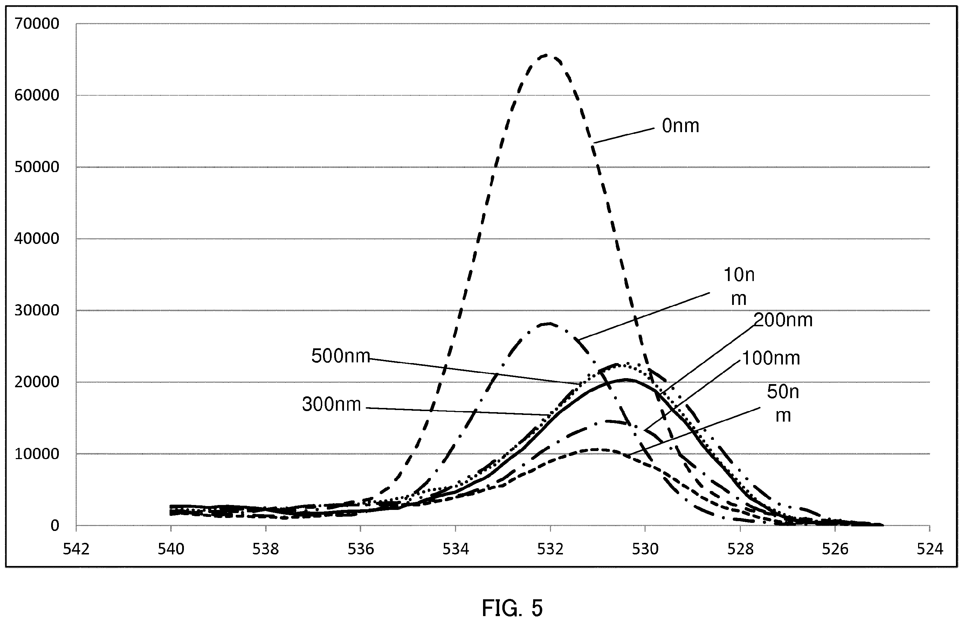

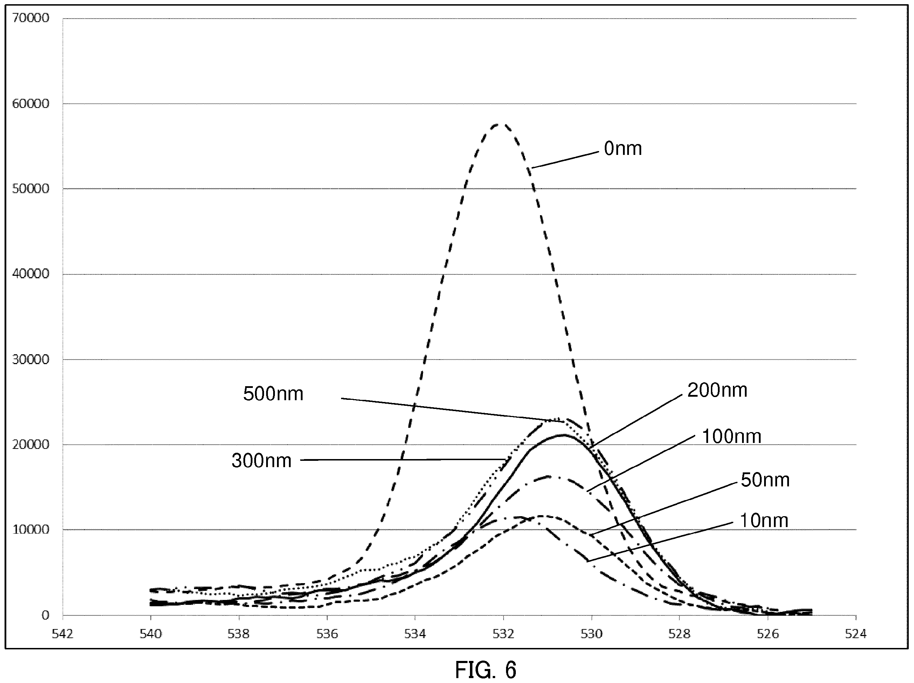

Note that the amount of O atoms in outermost layer 2x is unlikely to be influenced by the amount of O atoms derived from other components contained in coating film 2 (for example, inorganic particles of TiO₂). Hereinafter, the reason behind this will be described. FIG. 5 and FIG. 6 are graphs of the O1s peak specified with XPS method of coating films containing TiO₂, made in Examples 19 and 24, which will be mentioned later, respectively. FIG. 5 and FIG. 6 both show O1s peaks at positions with depths of 0 nm, 10 nm, 50 nm, 100 nm, 200 nm, 300 nm and 500 nm from the surface of coating film 2 toward metal sheet 1. Here, the O1s peak derived from TiO₂ is normally seen in the vicinity of 530 eV, and peaks seen at positions other than that region are derived from other components such as the silicone resin. As illustrated in FIG. 5 and FIG. 6, in either of coating films 2, the peak for outermost layer 2x (a region with a depth of 0 nm or more and less than 10 nm from the surface of coating film 2) is seen on the side with an energy higher than 530 eV. In contrast, peaks for surface layer 2y and main body layer 2z of coating film 2 (positions with depths of 10 nm or more from the surface of coating film 2 toward metal sheet 1) are seen in the vicinity of 530 eV. That is, in coating film 2, inorganic particles such as TiO₂ are mainly contained in surface layer 2y and main body layer 2z, and they are unlikely to exert influence on the concentration of O atoms in outermost layer 2x.

Here, when each of the amounts of Si atoms, N atoms, C atoms, O atoms and Ti atoms in outermost layer 2x, surface layer 2y and main body layer 2z is measured with XPS method, it can be analyzed under the following conditions while etching coating film 2.

### (Measurement Conditions)

Measuring apparatus: scanning X-ray photoelectron spectroscopy apparatus, VersaProbe II manufactured by ULVAC-PHI, INC.
X-ray source: AlKα (monochrome: 50 W, 15 kV) 1,486.6 eV
Analysis region: 0.2 mmφ
Utilizing charge neutralization (electron gun + ion neutralization gun)
(Etching Conditions)
Etching condition: Ar ion accelerating voltage of 4 kV
Etching rate: 8.29 nm/min (in terms of SiO₂), measured for every 10 nm

Note that, for coated metal sheet 100 according to the present invention, the methylene iodide sliding angle on the surface of coating film 2 surface is preferably 15° or more and 50° or less, and more preferably 35° or less. As mentioned above, coating film 2 of coated metal sheet 100 according to the present invention is subjected to a flame treatment (hydrophilization treatment), but when the hydrophilization treatment is insufficient, it is hard to obtain sufficient rain-streak satin resistance. Here, the methylene iodide sliding angle is increased when the surface of coating film 2 has high hydrophilicity or high roughness. However, it is increased excessively when the surface of coating film 2 has uneven hydrophilicity. For example, when the surface of coating film 2 is treated with a corona treatment, the methylene iodide sliding angle is greater than 50°. In contrast, when the surface of coating film 2 is subjected to a flame treatment, the surface is uniformly hydrophilized and the methylene iodide sliding angle is 50° or less.

Note that the reason why the methylene iodide sliding angle is greater than 50° when hydrophilicity of the surface of the coating film becomes uneven due to the corona discharge treatment or the like can be deduced as follows. Two coating films are assumed to be present as follows: both of the coating films have hydrophilic groups and hydrophobic groups in the same number on their respective surfaces, and one of the coating films has even distribution of hydrophilic groups and hydrophobic groups while the other has uneven distribution of hydrophilic groups and hydrophobic groups. The static contact angles of both coating films are generally the same as they are unlikely to be influenced by the distribution of hydrophilic groups and hydrophobic groups. In contrast, the dynamic contact angles (methylene iodide sliding angles) of both coating films are influenced by the distribution of hydrophilic groups and hydrophobic groups, and thus take different values. Upon the measurement of the methylene iodide sliding angle, if the distribution of hydrophilic groups and hydrophobic groups is uneven, a drop of methylene iodide is adsorbed to a portion having a high density of hydrophilic groups. That is, when the distribution of hydrophilic groups and hydrophobic groups is uneven, the drop of methylene iodide is less likely to move and the sliding angle thus becomes large, compared to the case where the distribution is even. The corona discharge treatment can introduce a large number of hydrophilic groups into the surface of the coating film, but the distribution thereof is uneven. Accordingly, in such a case, the methylene iodide sliding angle takes a high value greater than 50°.

Note that the methylene iodide sliding angle is a value measured as follows. First of all, 2 µl of methylene iodide is dropped on coating film 2. Subsequently, using a contact angle measuring apparatus, the inclination angle of coating film 2 (the angle between the plane perpendicular to the gravitational force and the coating film) is increased at the rate of 2 degrees/sec. Upon this, the drop of methylene iodide is observed with a camera attached to the contact angle measuring apparatus. Then, the inclination angle at the moment when the drop of methylene iodide starts falling is specified. This procedure is repeated 5 times, and the average value of five measurements is defined as the methylene iodide sliding angle of that coating film 2. Note that the moment when the drop of methylene iodide starts falling is defined as the moment when both of the bottom edge and the top edge of methylene iodide (the drop) in the gravity direction start moving.

Here, metal sheet 1 included in coated metal sheet 100 according to the present invention may be the same as the metal sheet described in the above-mentioned method for producing a coated metal sheet. Metal sheet 1 may have a chemical conversion film, an undercoat coating film or the like formed on its surface as long as it does not hinder the effects of the present invention. Furthermore, that metal sheet 1 may be subjected to a processing for forming irregularities such as embossing and drawing as long as it does not impair the effects of the present invention. In particular, metal sheet 1 is preferably a zinc-based plated steel sheet from the viewpoint of the balance between costs and long term durability.

Meanwhile, coating film 2 is not particularly limited as long as it at least contains a cured product of a silicone resin and satisfies the above-mentioned specifications. The cured product of a silicone resin may be the cured product of the silicone resin that the coating material contains, described in the above-mentioned method for producing a coated metal sheet. In addition, in particular, it is preferably a cured product of a silicone resin having a structure derived from methyltrialkoxysilane or phenyltrialkoxysilane. Methyl groups derived from methyltrialkoxysilane and phenyl groups derived from phenyltrialkoxysilane are likely to be removed upon the hydrophilization treatment (flame treatment) of the surface. Accordingly, when the cured product of the silicone resin has such a structure, hydrophilicity of the surface of coating film 2 is likely to be increased and the rain-streak stain resistance of coated metal sheet 100 is likely to be increased. Whether the cured product of the silicone resin that coating film 2 contains has a structure derived from methyltrialkoxysilane or phenyltrialkoxysilane or not can be specified by carrying out elemental analysis, structural analysis or the like of surface layer 2y.

In addition, the amount of the cured product of the silicone resin that coating film 2 contains is appropriately selected depending on the type of coated metal sheet 100 or the like, but it is preferably 1 to 10 parts by mass, more preferably 2 to 7 parts by mass, further preferably 2 to 6 parts by mass, and particularly preferably 3 to 6 parts by mass relative to 100 parts by mass of the total mass of coating film 2. When the amount of the cured product of the silicone resin that coating film 2 contains is in such a range, the proportion of Si atoms in the surface of coating film 2 (above-mentioned Siₐ) can be increased sufficiently, thereby providing a coated metal sheet in which rain-streak stains are unlikely to occur, and the scratch resistance and bending processability are satisfactory. Moreover, in particular, when the amount of the cured product of the silicone resin is 1 part by mass or more, the above-mentioned content ratio of Si atoms in the surface, Siₐ, is likely to be 8atm% or more. On the other hand, when the content of the cured product of the silicone resin is 10 parts by mass or less, the coating film is unlikely to be excessively hard and the bending processability is likely to be satisfactory.

Moreover, coating film 2 may contain another resin in addition to the cured product of the silicone resin, and may further contain inorganic particles, organic particles, a coloring pigment or the like. The above-described resin, inorganic particles, organic particles, coloring pigment or the like may be the same as the components that the coating material contains described in the above-mentioned method for producing a coated metal sheet. Note that the amount of the resin that coating film 2 contains is appropriately selected depending on an application of coated metal sheet 100 or the type of the resin, but the amount of the resin is preferably 25 to 60 parts by mass and more preferably 30 to 50 parts by mass relative to the total mass of coating film 2 from the viewpoint of the strength of coating film 2 or the like.

On the other hand, the amount of inorganic particles and/or organic particles that coating film 2 contains is appropriately selected depending on the surface condition of coating film 2 or the like. Normally, the total amount of inorganic particles and organic particles may be 1 to 40 parts by mass relative to 100 parts by mass of the mass of coating film 2. Furthermore, the amount of the coloring pigment is preferably 20 to 60 parts by mass and more preferably 30 to 55 parts by mass relative to the total mass of coating film 2.

Moreover, the thickness of coating film 2 is appropriately selected depending on an application of coated metal sheet 100 and the like, but it is normally in the range of 3 to 30 µm. The thickness is a value determined through gravimetric method from the specific gravity of the baked coating film and the weight difference of coated metal sheet 100 before and after the removal of coating film 2 by sandblasting or the like. When coating film 2 is too thin, the durability and concealing properties of coating film 2 may be insufficient. On the other hand, when coating film 2 is too thick, production costs are increased and popping may easily occur during the baking.

### Examples

Hereinafter, the present invention will be described in detail with reference to Examples; however, the present invention is not limited by these Examples.

### 1. Preparation of Coating materials (1)

Each coating material was prepared according to the following method.

### 1-1. Synthesis of Methyl-Based Silicone Resin 1

Into a 2-liter flask, 408 g (3.0 moles) of methyltrimethoxysilane was charged. Then, 800 g of water was added at 10°C or lower and mixed well. Next, under ice cooing, 180 to 216 g (10.0 to 12.0 moles) of an aqueous 0.05 N hydrochloric acid solution was added dropwise at 5 to 25°C over 20 to 40 minutes. After completion of the dropping, the mixture was stirred at 5 to 25°C for 0.6 to 6 hours to complete hydrolysis and dehydrative condensation. As a result of this, prepared solutions containing seven methyl-based silicone resins A to G, each having a different content of silanol groups, were obtained. Note that the amount of silanol groups and the amount of structural units of methyl-based silicone resins A to G were adjusted through the above-described reaction time (stirring time) and reaction temperature, as well as the amount added of the aqueous hydrochloric acid solution.

Subsequently, from that prepared solution, methanol produced by the hydrolysis was distilled off under reduced pressure at 70°C and 60 mmHg for 1 hour. The prepared solution after the distillation of methanol was clouded, and after leaving it at rest overnight, it was separated into 2 layers. The lower layer was a precipitated silicone resin that was insoluble in water. To that prepared solution, 469 g of methyl isobutyl ketone (MIBK) was added and the mixture was stirred at room temperature for 1 hour. As a result of this, the precipitated silicone resin was completely dissolved in MIBK. Then, the prepared solution was left at rest to be separated into the aqueous layer and the MIBK layer. Subsequently, the aqueous layer, which was the lower layer, was removed using a flask equipped with a cock to obtain a colorless and transparent silicone resin solution having a solid content of 50mass%.

When the structure of obtained methyl-based silicone resin A was measured with ²⁹Si-NMR, two broad signals were observed. Their chemical shifts were as follows: (1) δ = -54 to -58 ppm and (2) δ = -62 to -68 ppm. These chemical shifts are attributed to silicon atoms of Tₘ-2 unit and Tₘ-3 unit among Tₘ units represented by the following formulas, respectively. That is, Tₘ-1 unit was not contained in methyl-based silicone resin A. In addition, when ¹H-NMR analysis was carried out on methyl-based silicone resin A, it was found that all methoxy groups derived from methyltrimethoxysilane were hydrolyzed to become hydroxy groups.

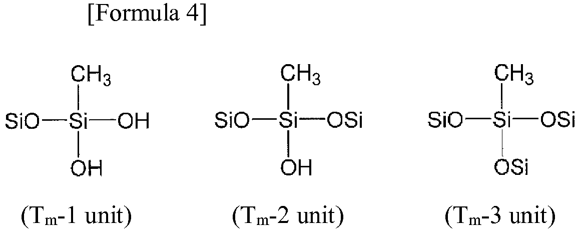

Furthermore, GPC analysis (in terms of polystyrene) was carried out under the following conditions to measure the weight average molecular weight Mw and the molecular weight distribution Mw/Mn of silicone resin A.
Measuring model: HLC-8320GPC manufactured by TOSOH CORPORATION
Columns: Shodex K-G + K-805L x 2 + K-800D
Eluent: chloroform
Temperature: column thermostat 40.0°C
Flow rate: 1.0 mL/min
Concentration: 0.2mass/volume%
Injection volume: 100 µl
Solubility: complete dissolution
Pretreatment: filtration with a 0.45 µm filter
Detector: differential refractometer (RI)

Similarly, for each of methyl-based silicones B to G, the structure was specified with ²⁹Si-NMR and ¹H-NMR analyses. In addition, the weight average molecular weight Mw and the molecular weight distribution Mw/Mn were measured with GPC analysis. Results of analysis for methyl-based silicones A to G are shown in Table 1 below.

**[Table 1]**

| Silicone resin | Weight average molecular weight | Molecular weight distribution (Mw/Mn) | T units/D units | Tₘ units | | | Amount of silanol groups relative to amount of Si atoms (mol%) |
|---|---|---|---|---|---|---|---|
| | | | | Tₘ-1 unit (mol%) | Tₘ-2 unit (mol%) | Tₘ-3 unit (mol%) | |
| A | 48000 | 7.2 | 100/0 | 0 | 8 | 92 | 8 |
| B | 2600 | 2.4 | 100/0 | 0 | 29 | 71 | 29 |
| C | 1400 | 1.7 | 100/0 | 0 | 38 | 62 | 38 |
| D | 790 | 1.4 | 100/0 | 0 | 48 | 52 | 48 |
| E | 51000 | 11.8 | 100/0 | 0 | 4 | 96 | 4 |
| F | 1300 | 1.3 | 100/0 | 0 | 52 | 48 | 52 |
| G | 680 | 1.1 | 100/0 | 0 | 24 | 76 | 24 |

### 1-2. Synthesis of Methyl-Based Silicone Resin 2

Into a 2-liter flask, 286 to 163 g (2.1 to 1.2 moles) of methyltrimethoxysilane and 108 to 216 g (0.9 to 1.8 moles) of dimethyldimethoxysilane were charged. Then, 800 g of water was added at 10°C or lower and mixed well. Next, under ice cooing, 180 to 216 g (10.0 to 12.0 moles) of an aqueous 0.05 N hydrochloric acid solution was added dropwise at 5 to 25°C over 20 to 40 minutes. After completion of the dropping, the mixture was stirred at 5 to 25°C for 0.6 to 6 hours to carry out hydrolysis and dehydrative condensation. After completion of the dropping, the same operations were carried out as Synthesis of Methyl-Based Silicone Resin 1 to obtain silicone resin solutions containing three methyl-based silicone resins H to J having a solid content of about 50mass%. Note that the amount of silanol groups and the amount of structural units of methyl-based silicone resins H to J were adjusted through the above-described reaction time (stirring time), reaction temperature, the amount added of the aqueous hydrochloric acid solution and the amount charged.

For each of obtained methyl-based silicones H to J, the structure was specified with ²⁹Si-NMR and ¹H-NMR analyses. Furthermore, the weight average molecular weight Mw and the molecular weight distribution Mw/Mn were measured with GPC analysis. Results of analysis for methyl-based silicones H to J are shown in Table 2 below. Note that Dₘ-1 unit and Dₘ-2 unit in Table 2 are structural units represented by the following formulas, respectively.

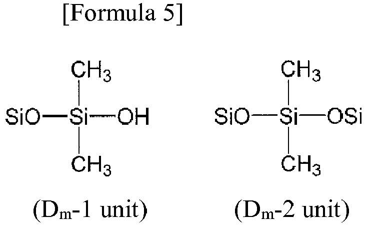

**[Table 2]**

| Silicone resin | Weight average molecular weight | Molecular weight distribution (Mw/Mn) | T units/ D units | Tₘ units | | | Dₘ units | | Amount of silanol groups relative to amount of Si atoms (mol%) |
|---|---|---|---|---|---|---|---|---|---|
| | | | | Tₘ-1 unit (mol%) | Tₘ-2 unit (mol%) | Tₘ-3 unit (mol%) | Dₘ-1 unit (mol%) | Dₘ-1 unit (mol%) | |
| H | 2900 | 2.7 | 71/29 | 0 | 21 | 50 | 4 | 25 | 25 |
| I | 2400 | 1.9 | 55/45 | 0 | 19 | 36 | 9 | 36 | 28 |
| J | 2100 | 2.0 | 40/60 | 0 | 14 | 26 | 13 | 47 | 27 |

### 1-3. Synthesis of Methyl/Phenyl-Based Silicone Resin 3

Into a 2-liter flask, 326 to 41 g (2.4 to 0.3 moles) of methyltrimethoxysilane and 119 to 535 g (0.6 to 2.7 moles) of phenyltrimethoxysilane were charged. Then, 800 g of water was added at 10°C or lower and mixed well. Next, under ice cooing, 180 to 216 g (10.0 to 12.0 moles) of an aqueous 0.05 N hydrochloric acid solution was added dropwise at 5 to 25°C over 20 to 40 minutes. After completion of the dropping, the mixture was stirred at 5 to 25°C for 0.6 to 6 hours to complete hydrolysis and dehydrative condensation. After completion of the dropping, the same operations were carried out as Synthesis of Methyl-Based Silicone Resin 1 to obtain prepared solutions containing five methyl/phenyl-based silicone resins K to O having a solid content of about 50mass%. Note that the amount of silanol groups and the amount of structural units of methyl/phenyl-based silicone resins K to O were adjusted through the above-described reaction time (stirring time), reaction temperature, the amount added of the aqueous hydrochloric acid solution and the amount charged.

For each of obtained methyl-based silicones K to O, the structure was specified with ²⁹Si-NMR and ¹H-NMR analyses. Note that, when the structure of methyl/phenyl-based silicone resin L was measured with ²⁹Si-NMR, four broad signals were observed. Their chemical shifts were as follows: (1) δ = -52 to -61 ppm, (2) δ = -62 to -71 ppm, (3) δ = -67 to -75 ppm and (4) δ = -75 to -83 ppm. These chemicals shifts are attributed to silicon atoms of Tₘ-2 unit, Tₘ-3 unit, T_{f}-2 unit and T_{f}-3 unit among Tₘ units and T_{f} units represented by the following formulas, respectively. In addition, when ¹H-NMR analysis was carried out on methyl/phenyl-based silicone resin L, it was found that all methoxy groups derived from methyltrimethoxysilane and phenyltrimethoxysilane were hydrolyzed to become hydroxy groups. Furthermore, the weight average molecular weight Mw and the molecular weight distribution Mw/Mn were measured with GPC analysis. Results of analysis are shown in Table 3.

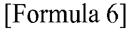

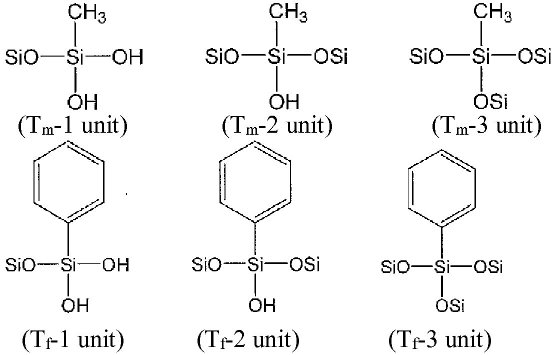

**[Table 3]**

| Silicone resin | Weight average molecular weight | Molecular weight distribution (Mw/Mn) | T units/ D units | Methyl/ phenyl | Tₘ units | | | T_{f} units | | | Amount of silanol groups relative to amount of Si atoms (mol%) |
|---|---|---|---|---|---|---|---|---|---|---|---|
| | | | | | Tₘ-1 unit (mol%) | Tₘ-2 (mol%) | Tₘ-3 unit (mol%) | T_{f}-1 unit (mol%) | T_{f}-2 unit (mol%) | T_{f}-3 unit (mol%) | |
| K | 2600 | 2.4 | 100/0 | 80/20 | 0 | 20 | 60 | 0 | 5 | 15 | 25 |
| L | 3100 | 2.9 | 100/0 | 66/34 | 0 | 18 | 48 | 0 | 9 | 25 | 27 |
| M | 2400 | 2.1 | 100/0 | 50/50 | 0 | 15 | 35 | 0 | 16 | 34 | 31 |
| N | 2600 | 1.8 | 100/0 | 20/80 | 0 | 5 | 15 | 0 | 21 | 59 | 26 |
| O | 3200 | 2.9 | 100/0 | 10/90 | 0 | 3 | 7 | 0 | 29 | 61 | 32 |

### 1-4. Synthesis of Methyl/Phenyl-Based Silicone Resin 4

Into a 2-liter flask, 109 to 27 g (0.8 to 0.2 moles) of methyltrimethoxysilane, 198 g (1.0 mole) of phenyltrimethoxysilane and 144 to 216 g (1.2 to 1.8 moles) of dimethyldimethoxysilane were charged. Then, 800 g of water was added at 10°C or lower and mixed well. Next, under ice cooing, 180 to 216 g (10.0 to 12.0 moles) of an aqueous 0.05 N hydrochloric acid solution was added dropwise at 5 to 25°C over 20 to 40 minutes, and the mixture was stirred at 5 to 25°C for 0.6 to 6 hours to complete hydrolysis and dehydrative condensation. After completion of the dropping, the same operations were carried out as Synthesis of Methyl-Based Silicone Resin 1 to obtain silicone resin solutions containing three methyl/phenyl-based silicone resins P to R having a solid content of about 50mass%. Note that the amount of silanol groups and the amount of structural units of methyl/phenyl-based silicone resins P to R were adjusted through the above-described reaction time (stirring time), reaction temperature, the amount added of the aqueous hydrochloric acid solution and the amount charged.

For each of obtained methyl-based silicones P to R, the structure was specified with ²⁹Si-NMR and ¹H-NMR analyses. Furthermore, the weight average molecular weight Mw and the molecular weight distribution Mw/Mn were measured with GPC analysis. Results of analysis are shown in Table 4.

**[Table 4]**

| Silicone resin | Weight average molecular weight | Molecular weight distribution (Mw/Mn) | T units/ D units | Methyl/ phenyl | Tₘ units | | | T_{f} units | | | Dₘ units | | Amount of silanol groups relative to amount of Si atoms (mol%) |
|---|---|---|---|---|---|---|---|---|---|---|---|---|---|
| | | | | | Tₘ-1 unit (mol%) | Tₘ-2 unit (mol%) | Tₘ-3 unit (mol%) | T_{f}-1 unit (mol%) | T_{f}-2 unit (mol%) | T_{f}-3 unit (mol%) | Dₘ-1 unit (mol%) | Dₘ-2 unit (mol%) | |
| P | 4200 | 3.1 | 60/40 | 66/34 | 0 | 11 | 15 | 0 | 14 | 20 | 0 | 40 | 25 |
| Q | 3900 | 3.1 | 50/50 | 66/34 | 0 | 8 | 8 | 0 | 18 | 16 | 0 | 50 | 28 |
| R | 3300 | 2.7 | 40/60 | 66/34 | 0 | 3 | 3 | 0 | 21 | 13 | 0 | 60 | 28 |

### 1-5. Arrangement of Methyl Silicate and Ethyl Silicate

For methyl silicate and ethyl silicate, the following commercial products were used.

### [Methyl Silicate S]

Methyl silicate 53A (manufactured by Colcoat Co., Ltd., condensate of tetramethoxysilane) weight average molecular weight (Mw): 840, number average molecular weight (Mn): 610, Mw/Mn = 1.4

### [Ethyl Silicate T]

Ethyl silicate 48 (manufactured by Colcoat Co., Ltd., condensate of tetraethoxysilane) weight average molecular weight (Mw): 1,300, number average molecular weight (Mn): 850, Mw/Mn = 1.5

### 1-6. Preparation of Coating materials

By mixing a polymer polyester resin having a number average molecular weight of 5,000, a glass transition temperature of 30°C and a hydroxy value of 28 mgKOH/g (manufactured by DIC Corporation) and a methylated melamine resin curing agent having 90mol% of methoxy groups (CYMEL (R) 303, manufactured by Mitsui Cytec Co., Ltd.), a composition including a polyester resin that serves as a base and a melamine resin curing agent was obtained. The blend ratio of the polyester resin and the methylated melamine resin curing agent was 70/30.

To the composition described above, 1mass% of dodecylbenzenesulfonic acid was added as a catalyst, relative to the solid content of the composition described above. Furthermore, dimethylaminoethanol was added. Note that the amount added of dimethylaminoethanol was such that the amine equivalent thereof is 1.25 times the acid equivalent of dodecylbenzenesulfonic acid.

Furthermore, as shown in Table 5, each of the above-mentioned methyl-based silicone resins, methyl/phenyl-based silicone resins, methyl silicate or ethyl silicate was added such that the amount thereof is 5mass% relative to the total solid content of the coating material. In addition, for the coating material to which methyl silicate or ethyl silicate was added, triethyl orthoformate was added such that the amount thereof is 5mass% relative to the total solid content of the coating material.

### 1-7. Arrangement of Metal Sheet

An A4-sized (210 mm x 297 mm) hot-dip Zn-55% A1 alloy-plated steel sheet having a sheet thickness of 0.27 mm and a per-side plating deposition amount of 90 g/m² was arranged as a metal sheet, and the surface thereof was alkali-degreased. Subsequently, an application-type chromate treatment liquid (NRC300NS, manufactured by Nippon Paint Co., Ltd.) was applied on the surface of the metal sheet such that the Cr deposition amount was 50 mg/m². Furthermore, an epoxy resin-based primer coating material (700P, manufactured by Nippon Fine Coatings Inc.) was applied using a roll coater such that the thickness of the cured film was 5 µm. Subsequently, the resultant sheet was baked such that the highest temperature that the base sheet reached was 215°C., thereby obtaining a plated steel sheet having a primer coating film formed thereon (hereinafter, also simply referred to as a "plated steel sheet").

### 2. Production of Coated Metal Sheet (1)

In each of Examples 1 to 16 and Comparative Examples 1, 2, 11 and 12, a coated metal sheet was obtained by carrying out the following coating film formation and flame treatment. In addition, in each of Comparative Examples 6 to 8, a coated metal sheet was obtained by carrying out the following coating film formation and corona discharge treatment. On the other hand, in each of Comparative Examples 3 to 5, 9 and 10, a coated metal sheet was obtained by carrying out the following coating film formation only.

### 2-1. Coating Film Formation

Each coating material shown in Table 5 and Table 6 was applied to the above-mentioned plated steel sheet using a roll coater such that the thickness of the cured film was 18 µm, and was baked for 45 seconds such that the highest temperature that the sheet reached was 225°C and the wind velocity on the sheet surface was 0.9 m/s. Note that, in order to confirm stability of the coating material, each coating material was applied 24 hours after its preparation.

### 2-2. Flame Treatment (Examples 1 to 16 and Comparative Examples 1, 2, 11 and 12)

The coating film formed in the above-described coating film formation was subjected to a flame treatment. As a burner for flame treatment, F-3000 manufactured by Flynn Burner Corporation (USA) was used. As a combustible gas, a mixed gas obtained by mixing LP gas (combustion gas) and clean dry air (LP gas:clean dry air (volume ratio) = 1:25) using a gas mixer was used. In addition, the flow rate of each gas was adjusted such that, for 1 cm² of a burner port of the burner, the flow rate of the LP gas (combustion gas) was 1.67 L/min and the flow rate of the clean dry air was 41.7 L/min. The length (a length represented by L in FIG. 1A) of the burner port of the burner head in the conveyance direction of a coating film was set to be 4 mm. The length (a length represented by W in FIG. 1B) of the burner port of the burner head in the direction perpendicular to the conveyance direction was set to be 450 mm. Furthermore, the distance between the burner port of the burner head and the surface of the coating film was set to be 50 mm depending on an amount desired of flame treatment. Moreover, the conveyance speed of the coating film was set to be 30 m/min, thereby adjusting the amount of flame treatment to be 212 kJ/m².

### 2-3. Corona Discharge Treatment (Comparative Examples 6 to 8)

For a corona discharge treatment, a corona discharge treatment apparatus manufactured by Kasuga Denki, Inc. having the following specifications was used.

### (Specifications)

Electrode: ceramic electrode
Length of electrode: 430 mm
Output: 310 W
In addition, each coating film was subjected to the corona discharge treatment once. The amount of corona discharge treatment was adjusted through the treatment speed. Specifically, the treatment was carried out at 3.8 m/min, thereby setting the amount of corona discharge treatment to be 200 W·min/m².

### 3. Tests (1)

For coated metal sheets made in Examples and Comparative Examples, or test pieces made by using coating materials used in Examples and Comparative Examples, the following tests were carried out. Results are shown in Table 5 and Table 6.

### (1) Amount of Silicone Resin or Silicate Evaporated

By applying each of the coating materials used in Examples and Comparative Examples to the surface of an aluminum sheet (JIS A5052) having a thickness of 0.5 mm such that the film thickness was 18 µm, a coating film was formed. Then, the coated aluminum sheet having the coating film formed thereon was cut into a 10 cm x 10 cm square, which was dissolved in a mixed acid solution of hydrofluoric acid, hydrochloric acid and nitric acid, and was further thermolyzed by irradiating it with microwave. Subsequently, by diluting the solution with ultrapure water to a certain volume, a test liquid was prepared. Using an ICP-AES analyzing apparatus (ICPE-9820 model) manufactured by Shimadzu Corporation, Si in that test liquid was analyzed quantitatively.

Meanwhile, a coating material was prepared in the same manner as Examples and Comparative Examples except that the silicone resin or silicate was not added, and that coating material was used to form a coating film. Then, as described above, Si in the test liquid was analyzed quantitatively.

By comparing these results, the amount of Si derived from a silicone resin or silicate in each coating film was determined. In addition, the amount of Si in the coating film was determined by calculation in the case where a silicone resin or silicate was not evaporated at all. Then, by comparing the amount of Si in the case where no evaporation occurred and the amount of Si in each of the coating films made in Examples or Comparative Examples, the amount of a silicone resin or silicate evaporated upon formation of the coating film was evaluated on the basis of the following criteria.
D: amount evaporated of 20% or more
C: 10% or more and less than 20%
B: 3% or more and less than 10%
A: less than 3%
Note that C, B and A were evaluated as passing.

### (2) Evaluation on Storage Stability of Coating materials

Coating materials used in Examples and Comparative Examples were stored in a thermostatic chamber at 40°C, and the viscosity of each coating material after 15 days was measured with a B-type viscometer. Then, by comparing viscosities before and after the storage, evaluation was carried out on the basis of the following criteria.
D: gelated in 15 days after being left in thermostatic chamber
C: rising rate of coating material viscosity is 100% or more before and after storage in thermostatic chamber
B: rising rate of coating material viscosity is 30% or more and less than 100% before and after storage in thermostatic chamber
A: rising rate of coating material viscosity is less than 30% before and after storage in thermostatic chamber
Note that C, B and A were evaluated as passing.

### (3) Method for Evaluating Pencil Hardness

In accordance with JIS K5600-5-4 (ISO/DIS 15184), a pencil hardness test was carried out for evaluating scratch resistance of the surface of a coating film. Scratch resistance of the surface of the coating film was evaluated on the basis of the following criteria.
A: H or harder
B: B to HB
C: 2B or softer
Note that A and B were evaluated as passing.

### (4) Measurement of Water Contact Angle

The water contact angle was measured for the surface of the coating film of the coated metal sheet made in each of Examples and Comparative Examples. The measurement was carried out by forming a 0.01 cc droplet of purified water in a thermostat and humidistat chamber at an atmospheric temperature of 23 ± 2°C and a relative humidity of 50 ± 5%, and using a contact angle measuring device DM901 manufactured by Kyowa Interface Science, Inc.

### (5) Evaluation of Rain-Streak Stain Resistance

The rain-streak stain resistance was evaluated as follows.

Each of the coated metal sheets made in Examples and Comparative Examples was attached to a vertical exposure board. Above the coated metal sheet, a corrugated sheet was further attached at an angle of 20° relative to the ground. Upon this, the corrugated sheet was installed such that rainwater ran down the surface of the coated metal sheet as streaks. In this state, an outdoor exposure test was carried out for 6 months, and the state of stain adhesion was then observed. The rain-streak stain resistance was evaluated using brightness difference (ΔL) of the coated metal sheet before and after the exposure as follows.
D: ΔL was 2 or more (stains were noticeable)
C: ΔL was 1 or more and less than 2 (rain-streak stains were not noticeable, but visible)
B: ΔL was less than 1 (rain-streak stains were hardly visible)
A: ΔL was less than 1 and no rain-streak stain was visible
Note that C, B and A were evaluated as passing.

**[Table 5]**

| No. | | Type of hydrophilizing agent | Symbol | Methyl/ phenyl ratio | T units/ D units ratio | Amount of silanol groups relative to amount of Si atoms (mol%) | Molecular weight | | Evaluation of evaporating properties | Surface treatment method | Storage stability of coating material | Pencil hardness | Water contact (°) | Evaluation of rain-streak stain resistance |
|---|---|---|---|---|---|---|---|---|---|---|---|---|---|---|
| | | | | | | | Mw | Mw/Mn | | | | | | |
| | 1 | Methyl-based Silicone resin | A | 100/0 | 100/0 | 8 | 48,000 | 7.2 | A | Flame | C | A | 59 | C |
| | 2 | | B | 100/0 | 100/0 | 29 | 2,600 | 2.4 | A | Flame | B | A | 24 | A |
| | 3 | | C | 100/0 | 100/0 | 38 | 1,400 | 1.7 | B | Flame | B | A | 23 | A |
| | 4 | | D | 100/0 | 100/0 | 48 | 790 | 1.4 | B | Flame | C | A | 39 | B |
| | 5 | | G | 100/0 | 100/0 | 24 | 680 | 1.1 | C | Flame | B | A | 22 | A |
| | 6 | | H | 100/0 | 71/29 | 25 | 2,900 | 2.7 | A | Flame | B | A | 29 | A |
| | 7 | | I | 100/0 | 55/45 | 28 | 2,400 | 1.9 | A | Flame | B | A | 35 | B |
| Examples | 8 | | J | 100/0 | 40/60 | 27 | 2,100 | 2.0 | A | Flame | B | A | 48 | C |
| | 9 | Methyl/ phenyl-based Silicone resin | K | 80/20 | 100/0 | 25 | 2,600 | 2.4 | A | Flame | A | A | 22 | A |
| | 10 | | L | 66/34 | 100/0 | 27 | 3,100 | 2.9 | A | Flame | A | A | 24 | A |
| | 11 | | M | 50/50 | 100/0 | 31 | 2,400 | 2.1 | A | Flame | A | A | 26 | A |
| | 12 | | N | 20/80 | 100/0 | 26 | 2,600 | 1.8 | A | Flame | A | A | 25 | A |
| | 13 | | O | 10/90 | 100/0 | 32 | 3,200 | 2.9 | A | Flame | A | B | 27 | A |
| | 14 | | P | 66/34 | 60/40 | 25 | 4,200 | 3.1 | A | Flame | A | A | 29 | A |
| | 15 | | Q | 66/34 | 50/50 | 28 | 3,900 | 3.1 | A | Flame | A | A | 37 | B |
| | 16 | | R | 66/34 | 40/60 | 28 | 3,300 | 2.7 | A | Flame | A | B | 49 | C |

**[Table 6]**

| No. | | Type of hydrophilizing agent | Symbol | Methyl/ phenyl ratio | T units/ D units ratio | Amount of silanol groups relative to amount of Si atoms (mol%) | Molecular weight | | Evaluation of evaporating properties | Surface treatment method | Storage stability of coating material | Pencil hardness | Water contact angle (°) | Evaluation of rain-streak stain resistance |
|---|---|---|---|---|---|---|---|---|---|---|---|---|---|---|
| | | | | | | | Mw | Mw/Mn | | | | | | |
| | 1 | Methyl-based Silicone resin | E | 100/0 | 100/0 | 4 | 51,000 | 11.8 | A | Flame | D | A | 64 | D |
| | 2 | | F | 100/0 | 100/0 | 52 | 1,300 | 1.3 | B | Flame | D | A | 51 | D |
| | 3 | | B | 100/0 | 100/0 | 29 | 2,600 | 2.4 | A | Untreated | B | A | 89 | D |
| | 4 | Methyl/phenyl-based Silicone resin | L | 66/34 | 100/0 | 27 | 3,100 | 2.9 | A | Untreated | A | A | 87 | D |
| | 5 | | P | 66/34 | 60/40 | 25 | 4,200 | 3.1 | A | Untreated | A | A | 86 | D |
| Comparative Examples | 6 | Methyl-based Silicone resin | B | 100/0 | 100/0 | 29 | 2,600 | 2.4 | A | Corona discharge | B | A | 66 | D |
| | 7 | Methyl/phenyl-based Silicone resin | L | 66/34 | 100/0 | 27 | 3,100 | 2.9 | A | Corona discharge | A | A | 64 | D |
| | 8 | | P | 66/34 | 60/40 | 25 | 4,200 | 3.1 | A | Corona discharge | A | A | 61 | D |
| | 9 | Methyl silicate | S | - | - | - | 840 | 1.4 | D | Untreated | D | B | 87 | D |
| | 10 | Ethyl silicate | T | - | - | - | 1,300 | 1.5 | D | Untreated | D | A | 84 | D |
| | 11 | Methyl silicate | S | - | - | - | 840 | 1.4 | D | Flame | D | B | 70 | D |
| | 12 | Ethyl silicate | T | - | - | - | 1,300 | 1.5 | D | Flame | D | A | 44 | B |

As shown in Table 5 and Table 6, even when a coating film was formed using a silicone resin-containing coating material, only this did not lead to improvement. For any of the silicone resins, the water contact angle of the coating film was high and the rain-streak stain resistance of the coated metal sheet was bad (Comparative Examples 3 to 5). In addition, even when the corona discharge treatment was carried out after the coating film formation, the water contact angle was high and the rain-streak stain resistance was insufficient (Comparative Examples 6 to 8). It is assumed that it was difficult for the corona discharge treatment to uniformly carry out the hydrophilization treatment.

In contrast, for each coated metal sheet obtained by forming a coating film with a silicone resin-containing coating material in which the amount (number of moles) of silanol groups is 5 to 50mol% relative to the amount (number of moles) of Si atoms, and by carrying out the flame treatment, the water contact angle was sufficiently low and the rain-streak stain resistance was at a passing level (Examples 1 to 16). The silicone resin containing silanol groups in an amount in the range described above is likely to be enriched uniformly on the surface of the coating film. In addition, although phenyl groups bonded to Si atoms are, in general, unlikely to be removed by a common surface treatment (for example, corona discharge treatment) (for example, Comparative Examples 7 and 8), the flame treatment can remove not only methyl groups but also phenyl groups, and it can introduce silanol groups or the like to the surface of the coating film (for example, Examples 9 to 16). Moreover, the flame treatment was able to uniformly hydrophilize the surface of the coating film.

Furthermore, in silicone resin-containing coating materials, the evaluation of evaporating properties was satisfactory. That is, the silicone resin was unlikely to be evaporated upon curing the coating material and the coating film was unlikely to be fouled with silica or the like adhering to the heating apparatus, and therefore, coated metal sheets having a satisfactory appearance were obtained.

On the other hand, in the case where a coating material containing a silicone resin in which the amount of silanol groups are too small (less than 5mol%) was used to form a coating film, even when the flame treatment was carried out, the rain-streak stain resistance was insufficient (Comparative Example 1). When the amount of silanol groups is less than 5mol%, the molecular weight of the silicone resin tends to become larger, and the silicone resin is polymerized through some degree of reaction. Therefore, the silicone resin is unlikely to be enriched uniformly on the surface and is likely to be in the form of sea-island. As a result, it is assumed that even when the flame treatment was carried out, the surface of the coated metal sheet was not hydrophilized uniformly and the rain-streak stain resistance was not enhanced sufficiently.

In contrast, in the case where a coating material containing a silicone resin in which the amount of silanol groups are excessive (greater than 50mol%) was used to form a coating film, the rain-streak stain resistance was not enhanced sufficiently (Comparative Example 2). When the amount of silanol groups is excessive, it is believed that if the time interval between preparation of the coating material and application thereof was long, the silicone resin underwent reaction and it was difficult to uniformly hydrophilize the surface of the coated metal sheet.

In addition, for coating materials containing organosilicate such as methyl silicate or ethyl silicate, the storage stability was not sufficient and the coating materials were likely to be evaporated upon curing coating films (Comparative Examples 9 to 12). Furthermore, in coated metal sheets made by using a coating material containing methyl silicate, the scratch resistance was low, and even when the flame treatment was carried out, the rain-streak stain resistance was low, either (Comparative Examples 9 and 11). It is assumed that, in that coating material, methyl silicate was not likely to be enriched on the surface of the film upon the application, and methyl silicate was evaporated as well upon curing the film.

### 4. Preparation of Coating materials (2)

Each coating material was prepared according to the following method.

### 4-1. Synthesis of Methyl-Based Silicone Resin U

Into a 2-liter flask, 408 g (3.0 moles) of methyltrimethoxysilane was charged. Then, 800 g of water was added at 10°C or lower and mixed well. Next, under ice cooing, 216 g (12.0 moles) of an aqueous 0.05 N hydrochloric acid solution was added dropwise at 5°C over 40 minutes. After completion of the dropping, the mixture was stirred at 10°C for 6 hours to complete hydrolysis and dehydrative condensation. As a result of this, a prepared solution containing methyl-based silicone resin U was obtained.

Subsequently, from that prepared solution, methanol produced by the hydrolysis was distilled off under reduced pressure at 70°C and 60 mmHg for 1 hour. The prepared solution after the distillation of methanol was clouded, and after leaving it at rest overnight, it was separated into 2 layers. The lower layer was a precipitated silicone resin that was insoluble in water. To that prepared solution, 469 g of methyl isobutyl ketone (MIBK) was added and the mixture was stirred at room temperature for 1 hour. As a result of this, the precipitated silicone resin was completely dissolved in MIBK. Then, the prepared solution was left at rest to be separated into the aqueous layer and the MIBK layer. Subsequently, the aqueous layer, which was the lower layer, was removed using a flask equipped with a cock to obtain a colorless and transparent silicone resin solution having a solid content of 50mass%.

When the structure of obtained methyl-based silicone resin U was measured with ²⁹Si-NMR, two broad signals were observed. Their chemical shifts were as follows: (1) δ = -54 to -58 ppm and (2) δ = -62 to -68 ppm. These chemical shifts are attributed to silicon atoms of Tₘ-2 unit and Tₘ-3 unit among Tₘ units represented by the following formulas, respectively. That is, Tₘ-1 unit was not contained in methyl-based silicone resin U. In addition, when ¹H-NMR analysis was carried out on methyl-based silicone resin U, it was found that all methoxy groups derived from methyltrimethoxysilane were hydrolyzed to become hydroxy groups.

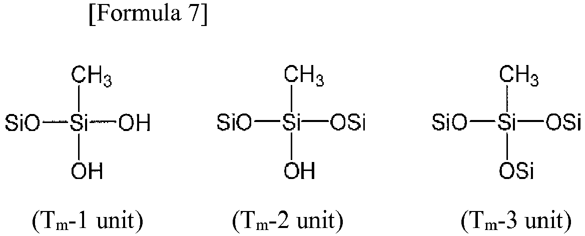

Furthermore, GPC analysis (in terms of polystyrene) was carried out under the following conditions to measure the weight average molecular weight Mw and the molecular weight distribution Mw/Mn of silicone resin U. Results are shown in Table 7.
Measuring model: HLC-8320GPC manufactured by TOSOH CORPORATION
Columns: Shodex K-G + K-805L x 2 + K-800D
Eluent: chloroform
Temperature: column thermostat 40.0°C
Flow rate: 1.0 mL/min
Concentration: 0.2mass/volume%
Injection volume: 100 µl
Solubility: complete dissolution
Pretreatment: filtration with a 0.45 µm filter
Detector: differential refractometer (RI)

### 4-2. Synthesis of Methyl-Based Silicone Resin V

Into a 2-liter flask, 286 g (2.1 moles) of methyltrimethoxysilane and 108 g (0.9 moles) of dimethyldimethoxysilane were charged. Then, 800 g of water was added at 10°C or lower and mixed well. Next, under ice cooing, 198 g (11.0 moles) of an aqueous 0.05 N hydrochloric acid solution was added dropwise at 5 to 25°C over 20 minutes. After completion of the dropping, the mixture was stirred at 15°C for 6 hours to carry out hydrolysis and dehydrative condensation. After completion of the dropping, the same operations were carried out as Synthesis of Methyl-Based Silicone Resin U to obtain a silicone resin solution containing methyl-based silicone resin V having a solid content of about 50mass%.

For obtained methyl-based silicone resin V, the structure was specified with ²⁹Si-NMR and ¹H-NMR analyses. Furthermore, the weight average molecular weight Mw and the molecular weight distribution Mw/Mn were measured with GPC analysis. Results of analysis for methyl-based silicone V are shown in Table 7. Note that Dₘ-1 unit and Dₘ-2 unit in Table 7 are structural units represented by the following formulas, respectively.

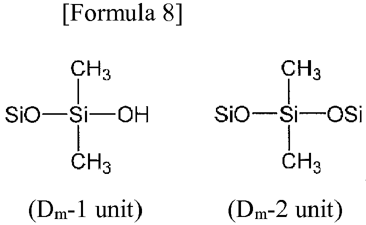

**[Table 7]**

| Silicone resin | Weight average molecular weight | Molecular weight distribution (Mw/Mn) | T units/ D units | Tₘ units | | | Dₘ units | | Amount of silanol groups relative to amount of Si atoms (mol%) |
|---|---|---|---|---|---|---|---|---|---|
| | | | | Tₘ-1 unit (mol%) | Tₘ-2 unit (mol%) | Tₘ-3 unit (mol%) | Dₘ-1 unit (mol%) | Dₘ-2 unit (mol%) | |
| U | 2600 | 2.4 | 100/0 | 0 | 29 | 71 | - | - | 29 |
| V | 2900 | 2.7 | 71/29 | 0 | 21 | 50 | 4 | 25 | 25 |

### 4-3. Synthesis of Methyl/Phenyl-Based Silicone Resin W

Into a 2-liter flask, 272 g (2.0 moles) of methyltrimethoxysilane and 119 g (1.0 mole) of phenyltrimethoxysilane were charged. Then, 800 g of water was added at 10°C or lower and mixed well. Next, under ice cooing, 198 g (11.0 moles) of an aqueous 0.05 N hydrochloric acid solution was added dropwise at 5 to 25°C over 30 minutes. After completion of the dropping, the mixture was stirred at 10°C for 6 hours to complete hydrolysis and dehydrative condensation. After completion of the dropping, the same operations were carried out as Synthesis of Methyl-Based Silicone Resin U to obtain a prepared solution containing methyl/phenyl-based silicone resin W having a solid content of about 50mass%.

For obtained methyl/phenyl-based silicone resin W, the structure was specified with ²⁹Si-NMR and ¹H-NMR analyses. Note that, when the structure of methyl/phenyl-based silicone resin W was measured with ²⁹Si-NMR, four broad signals were observed. Their chemical shifts were as follows: (1) δ = -52 to -61 ppm, (2) δ = -62 to -71 ppm, (3) δ = -67 to -75 ppm and (4) δ = -75 to -83 ppm. These chemicals shifts are attributed to silicon atoms of Tₘ-2 unit, Tₘ-3 unit, T_{f}-2 unit and T_{f}-3 unit among Tₘ units and Tf units represented by the following formulas, respectively. In addition, when ¹H-NMR analysis was carried out on methyl/phenyl-based silicone resin W, it was found that all methoxy groups derived from methyltrimethoxysilane and phenyltrimethoxysilane were hydrolyzed to become hydroxy groups. Furthermore, the weight average molecular weight Mw and the molecular weight distribution Mw/Mn were measured with GPC analysis. Results of analysis are shown in Table 8.

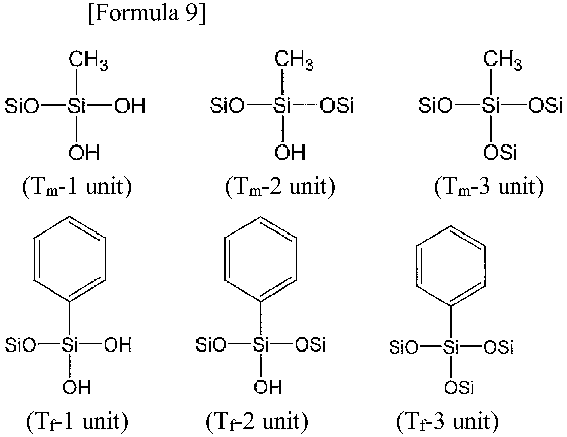

### 4-4. Synthesis of Methyl/Phenyl-Based Silicone Resin X

Into a 2-liter flask, 109 g (0.8 moles) of methyltrimethoxysilane, 198 g (1.0 mole) of phenyltrimethoxysilane and 144 g (1.2 moles) of dimethyldimethoxysilane were charged. Then, 800 g of water was added at 10°C or lower and mixed well. Next, under ice cooing, 216 g (12.0 moles) of an aqueous 0.05 N hydrochloric acid solution was added dropwise at 5 to 25°C over 40 minutes, and the mixture was stirred at 10°C for 6 hours to complete hydrolysis and dehydrative condensation. After completion of the dropping, the same operations were carried out as Synthesis of Methyl-Based Silicone Resin U to obtain a silicone resin solution containing methyl/phenyl-based silicone resin X having a solid content of about 50mass%.

For obtained methyl/phenyl-based silicone resin X, the structure was specified with ²⁹Si-NMR and ¹H-NMR analyses. Furthermore, the weight average molecular weight Mw and the molecular weight distribution Mw/Mn were measured with GPC analysis. Results of analysis are shown in Table 8.

**[Table 8]**

| Silicone resin | Weight average molecular weight | Molecular weight distribution (Mw/Mn) | T units/ D units | Methyl/ phenyl | Tₘ units | | | T_{f} units | | | Dₘ units | | Amount of silanol groups relative to amount of Si atoms (mol%) |
|---|---|---|---|---|---|---|---|---|---|---|---|---|---|
| | | | | | Tₘ-1 unit (mol%) | Tₘ-2 unit (mol%) | Tₘ-3 unit (mol%) | T_{f}-1 unit (mol%) | T_{f}-2 unit (mol%) | T_{f}-3 unit (mol%) | Dₘ-1 unit (mol%) | Dₘ-2 unit (mol%) | |
| W | 3100 | 2.9 | 100/0 | 66/34 | 0 | 18 | 48 | 0 | 9 | 25 | 0 | 0 | 27 |
| X | 4200 | 3.1 | 60/40 | 66/34 | 0 | 11 | 15 | 0 | 14 | 20 | 0 | 40 | 25 |

### 4-5. Arrangement of Methyl Silicate and Ethyl Silicate

For methyl silicate Y and ethyl silicate Z, the following commercial products were used.

### [Methyl Silicate Y]

Methyl silicate 53A (manufactured by Colcoat Co., Ltd., condensate of tetramethoxysilane) weight average molecular weight (Mw): 840, number average molecular weight (Mn): 610, Mw/Mn = 1.4

### [Ethyl Silicate Z]

Ethyl silicate 48 (manufactured by Colcoat Co., Ltd., condensate of tetraethoxysilane) weight average molecular weight (Mw): 1,300, number average molecular weight (Mn): 850, Mw/Mn = 1.5

### 4-6. Preparation of Coating materials

By mixing a polymer polyester resin having a number average molecular weight of 5,000, a glass transition temperature of 30°C and a hydroxy value of 28 mgKOH/g (manufactured by DIC Corporation) and a methylated melamine resin curing agent having 90mol% of methoxy groups (CYMEL (R) 303, manufactured by Mitsui Cytec Co., Ltd.), a composition including a polyester resin that serves as a base and a melamine resin curing agent was obtained. The blend ratio of the polyester resin and the methylated melamine resin curing agent was 70/30. Furthermore, titanium oxide having an average particle diameter of 0.28 µm ((pigment), JR-603, Tayca Corporation), hydrophobic silica A having an average particle diameter of 5.5 µm (SILYSIA 456, FUJI SILYSIA CHEMICAL, LTD.), and hydrophobic silica B having an average particle diameter of 12 µm (SILYSIA 476, FUJI SILYSIA CHEMICAL, LTD.) were added, the amounts of which were 45mass%, 4mass% and 3mass%, respectively, relative to the solid content of the coating material.

To the composition described above, 1mass% of dodecylbenzenesulfonic acid was added as a catalyst, relative to the total solid content of the coating material. Furthermore, dimethylaminoethanol was added. Note that the amount added of dimethylaminoethanol was such that the amine equivalent thereof is 1.25 times the acid equivalent of dodecylbenzenesulfonic acid.

Furthermore, each of the above-mentioned methyl-based silicone resins, methyl/phenyl-based silicone resins, methyl silicate or ethyl silicate was added such that the amount thereof follows the proportion shown in Table 9 relative to the total solid content of the coating material. Those coating materials were stored at 20 to 30°C for 15 days. In addition, for the coating material to which methyl silicate Y or ethyl silicate Z was added, triethyl orthoformate was added as a dehydrating agent upon preparation of the coating material such that the amount thereof is 5mass% relative to the total solid content of the coating material.

### 4-7. Arrangement of Metal Sheet

An A4-sized (210 mm x 297 mm) hot-dip Zn-55% A1 alloy-plated steel sheet having a sheet thickness of 0.27 mm and a per-side plating deposition amount of 90 g/m² was arranged as a metal sheet, and the surface thereof was alkali-degreased. Subsequently, an application-type chromate treatment liquid (NRC300NS, manufactured by Nippon Paint Co., Ltd.) was applied on the surface of the metal sheet such that the Cr deposition amount was 50 mg/m². Furthermore, an epoxy resin-based primer coating material (700P, manufactured by Nippon Fine Coatings Inc.) was applied using a roll coater such that the thickness of the cured film was 5 µm. Subsequently, the resultant sheet was baked such that the highest temperature that the base sheet reached was 215°C., thereby obtaining a plated steel sheet having a primer coating film formed thereon (hereinafter, also simply referred to as a "plated steel sheet").

### 5. Production of Coated Metal Sheet (2)

In each of Examples 17 to 26 and Comparative Examples 13, 16, 21 and 22, a coated metal sheet was obtained by carrying out the following coating film formation and flame treatment. On the other hand, in each of Comparative Examples 14, 15 and 17 to 20, a coated metal sheet was obtained by carrying out the following coating film formation only.

### 5-1. Coating Film Formation

Each of the coating materials shown in Table 9 (all of which are coating materials that have been stored for 15 days since their preparation) was applied to the above-mentioned plated steel sheet using a roll coater such that the thickness of the cured film was 18 µm, and was baked for 45 seconds such that the highest temperature that the sheet reached was 225 °C and the wind velocity on the sheet surface was 0.9 m/s.

### 5-2. Flame Treatment (Examples 17 to 26 and Comparative Examples 13, 16, 21 and 22)

The coating film formed in the above-described coating film formation was subjected to a flame treatment. As a burner for flame treatment, F-3000 manufactured by Flynn Burner Corporation (USA) was used. As a combustible gas, a mixed gas obtained by mixing LP gas (combustion gas) and clean dry air (LP gas:clean dry air (volume ratio) = 1:25) using a gas mixer was used. In addition, the flow rate of each gas was adjusted such that, for 1 cm² of a burner port of the burner, the flow rate of the LP gas (combustion gas) was 1.67 L/min and the flow rate of the clean dry air was 41.7 L/min. The length (a length represented by L in FIG. 1A) of the burner port of the burner head in the conveyance direction of a coating film was set to be 4 mm. The length (a length represented by W in FIG. 1B) of the burner port of the burner head in the direction perpendicular to the conveyance direction was set to be 450 mm. Furthermore, the distance between the burner port of the burner head and the surface of the coating film was set to be 50 mm depending on an amount desired of flame treatment. Moreover, the conveyance speed of the coating film was set to be 20m/min, thereby adjusting the amount of flame treatment to be 319kJ/m².

### 6. Tests (2)

For coated metal sheets made in Examples and Comparative Examples, or test pieces made by using coating materials used in Examples and Comparative Examples, the following measurements and evaluations were carried out. Results are shown in Table 9.

### (1) XPS Measurement

XPS measurement was carried out for the surface of the coating film with a scanning X-ray photoelectron spectroscopy apparatus, AXIS-NOVA manufactured by Kratos Analytical, Ltd. Then, both Siₐ and x were specified, wherein Siₐ is the proportion of Si atoms based on the amount of Si atoms, N atoms, C atoms, O atoms and Ti atoms in the surface of the coating film, and x is the ratio of the amount of O atoms to the amount of C atoms in the surface of the coating film. In addition, the C1s peak top in the obtained X-ray photoelectron spectroscopic spectrum was corrected to be 285 eV, and the Si₂ₚ spectrum was separated into a peak corresponding to 103.5 eV and a peak corresponding to 102.7 eV. Then, y was also calculated wherein y is the ratio of the peak area of 103.5 eV, Si_{inorganic,} to the peak area of the entire Si₂ₚ spectrum, Si₂ₚ. Note that measurement conditions upon the XPS measurement were as follows. Moreover, the Si₂ₚ spectrum was subjected to background subtraction with Linear method and then treated with a complex function of Gaussian function and Lorentz function, thereby separating the spectrum into the peak of organic Si atoms (102.7 eV) and the peak of inorganic Si atoms (103.5 eV).

### (Measurement Conditions)

X-ray source: A1Kα (1,486.6 eV)
Analysis region: 700 x 300 µm

### (2) Evaluation of Pencil Hardness

In accordance with JIS K5600-5-4 (ISO/DIS 15184), a pencil hardness test was carried out for evaluating scratch resistance of the surface of a coating film. Scratch resistance of the surface of the coating film was evaluated on the basis of the following criteria.
A: 2H or harder
B: HB to H
C: F or softer
Note that A and B were evaluated as passing.

### (3) Evaluation of Bending Processability

Under a thermostat and humidistat environment with a temperature of 23 ± 2°C and a relative humidity of 50 ± 5%, 180° bending of a coated metal sheet was carried out as if a sheet having a thickness 4 times the thickness of the coated metal sheet was sandwiched. Then, the surface of the coating film at a part subjected to the bending process was observed with a loupe (magnification: 10 times) and visually. The bending processability was evaluated on the basis of the following criteria.
A: no crack was found by loupe observation
B: no crack was found by visual observation
C: cracks were found by visual observation
Note that A was evaluated as passing.

### (4) Measurement of Methylene Iodide Sliding Angle

On a coating film that was held horizontally, 2 µl of methylene iodide was dropped. Subsequently, using a contact angle measuring apparatus (DM901, manufactured by Kyowa Interface Science, Inc.), the inclination angle of the coating film (the angle between the horizontal plane and the coating film) was increased at the rate of 2 degrees/sec. Upon this, the drop of methylene iodide was observed with a camera attached to the contact angle measuring apparatus. Then, the inclination angle at the moment when the drop of methylene iodide starts falling was specified. This procedure was repeated 5 times, and the average value of five measurements was defined as the methylene iodide sliding angle of that coating film. Note that the moment when the drop of methylene iodide starts falling was defined as the moment when both of the bottom edge and the top edge of the drop of methylene iodide in the gravity direction start moving.

### (5) Evaluation of Rain-Streak Stain Resistance

The rain-streak stain resistance was evaluated as follows.

Each of the coated metal sheets made in Examples and Comparative Examples was attached to a vertical exposure board. Above the coated metal sheet, a corrugated sheet was further attached at an angle of 20° relative to the ground. Upon this, the corrugated sheet was installed such that rainwater ran down the surface of the coated metal sheet as streaks. In this state, an outdoor exposure test was carried out for 6 months, and the state of stain adhesion was then observed. The rain-streak stain resistance was evaluated using brightness difference (ΔL) of the coated metal sheet before and after the exposure as follows.
D: ΔL was 2 or more (stains were noticeable)
C: ΔL was 1 or more and less than 2 (rain-streak stains were not noticeable, but visible)
B: ΔL was less than 1 (rain-streak stains were hardly visible)
A: ΔL was less than 1 and no rain-streak stain was visible
Note that C, B and A were evaluated as passing.

**[Table 9]**

| No. | | Hydrophilizing agent | | | Surface treatment method | Results of XPS analysis | | | Physical properties of coating film | | | |
|---|---|---|---|---|---|---|---|---|---|---|---|---|
| | | Type | Symbol | Amount added (wt%) | | Siₐ (atm%) | x (O/C) (atm%) | y (Si_{inorganid/}Si₂ₚ) | Pencil hardness | Bending processability | Methylene iodide sliding angle | Evaluation of rain-streak stain resistance |
| Examples | 17 | Methyl-based Silicone resin | U | 1.5 | Flame | 11.6 | 0.82 | 0.92 | A | A | 35 | C |
| | 18 | | U | 3.0 | Flame | 17.4 | 1.42 | 0.91 | A | A | 28 | A |
| | 19 | | U | 5.0 | Flame | 23.8 | 2.73 | 0.88 | A | A | 24 | A |
| | 20 | | U | 9.0 | Flame | 28.3 | 3.13 | 0.78 | A | A | 20 | A |
| | 21 | | V | 5.0 | Flame | 22.0 | 2.42 | 0.69 | A | A | 23 | A |
| | 22 | Methyl/phenyl-based Silicone resin | W | 1.5 | Flame | 8.4 | 0.92 | 0.94 | A | A | 31 | C |
| | 23 | | W | 3.0 | Flame | 14.1 | 1.54 | 0.87 | A | A | 24 | A |
| | 24 | | W | 5.0 | Flame | 21.0 | 2.25 | 0.80 | A | A | 20 | A |
| | 25 | | W | 9.0 | Flame | 26.3 | 2.71 | 0.78 | A | A | 25 | A |
| | 26 | | X | 5.0 | Flame | 20.3 | 2.19 | 0.64 | A | A | 21 | A |
| Comparative Examples | 13 | Methyl-based Silicone resin | U | 0.8 | Flame | 7.6 | 0.71 | 0.93 | A | A | 40 | D |
| | 14 | | U | 5.0 | Untreated | 24.1 | 0.52 | 0.28 | A | A | 38 | D |
| | 15 | | V | 5.0 | Untreated | 23.4 | 0.64 | 0.22 | A | A | 37 | D |
| | 16 | Methyl/phenyl-based Silicone resin | W | 1.0 | Flame | 7.0 | 0.72 | 0.94 | A | A | 39 | D |
| | 17 | | W | 5.0 | Untreated | 18.1 | 0.57 | 0.24 | A | A | 42 | D |
| | 18 | | X | 5.0 | Untreated | 17.8 | 0.46 | 0.23 | A | A | 41 | D |
| | 19 | Methyl silicate | Y | 5.0 | Untreated | 7.8 | 0.58 | 0.59 | B | C | 12 | D |
| | 20 | Ethyl silicate | Z | 5.0 | Untreated | 9.6 | 0.61 | 0.44 | B | C | 14 | D |
| | 21 | Methyl silicate | Y | 5.0 | Flame | 8.6 | 0.69 | 0.82 | B | C | 37 | D |
| | 22 | Ethyl silicate | Z | 5.0 | Flame | 9.1 | 0.72 | 0.86 | B | C | 39 | D |

As shown in above-described Table 9, when Siₐ is 8.0atm% or more and above-described x is 0.8 or more, and furthermore, y is 0.6 or more, all of the results of pencil hardness, bending processability and rain-streak stain resistance were then satisfactory (Examples 17 to 26). In contrast, when the proportion of Si atoms, Siₐ, is less than 8.0atm%, the rain-streak stain resistance was low (Comparative Examples 13, 16 and 19). It is assumed that a sufficient amount of Si atoms were not contained in the surface of the coating film, and therefore, the amount of siloxane bonds or silanol groups in the surface of the coating film was unlikely to be increased sufficiently and it was difficult to enhance hydrophilicity.

In addition, even when the proportion of Si atoms, Siₐ, is 8.0atm% or more, the rain-streak stain resistance was bad as well if x is less than 0.8 or y is less than 0.6 (Comparative Examples 14, 15, 17, 18 and 20 to 22). When x is less than 0.8 or y is less than 0.6, it is believed that organic groups derived from the silicone resin or organic groups derived from organosilicate were not desorbed sufficiently, and it is assumed that a large amount of organic groups were left on the surface and therefore hydrophilicity was not enhanced sufficiently.

Moreover, in particular, when organosilicate is contained, bending processability and pencil hardness of the coated metal sheet was evaluated to be low (Comparative Examples 19 to 22). It is assumed that organosilicate is unlikely to be enriched on the surface and organosilicate also tends to remain inside the coating film in a large amount, and therefore, the bending processability or the like was decreased.

### 7. Reference Test (3)

For coated metal sheets made in above-mentioned Examples 17 to 26 and Comparative Examples 14, 15 and 17 to 22, or test pieces made by using coating materials used in Examples and Comparative Examples, the following XPS measurement was carried out. Results are shown in Table 10.

### ·XPS Measurement

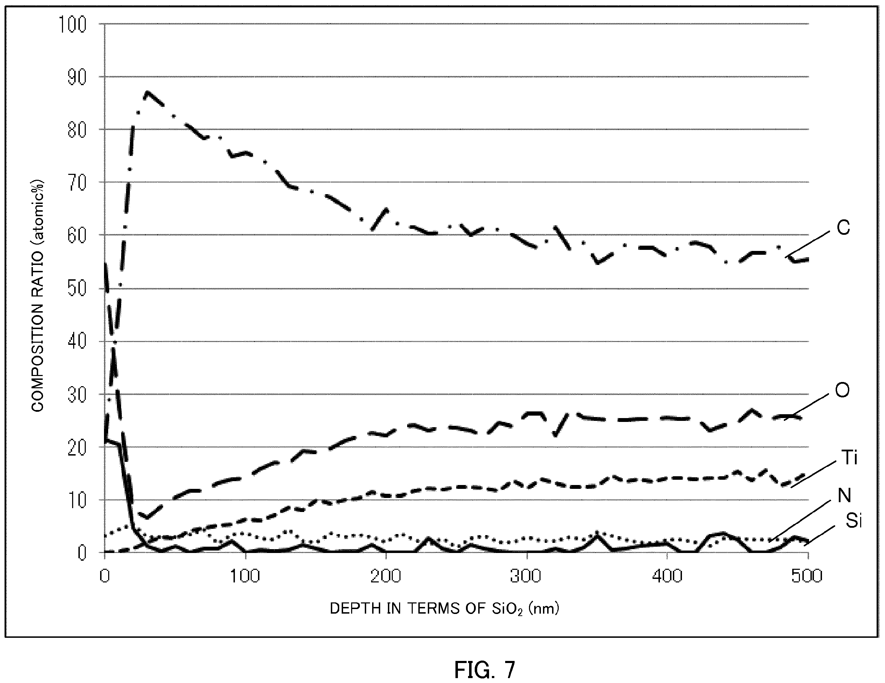

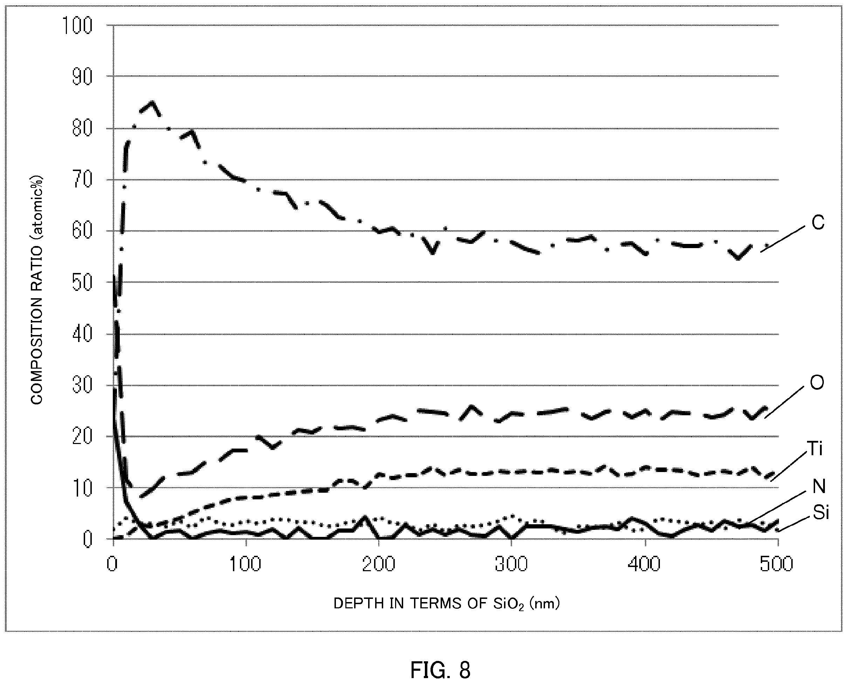

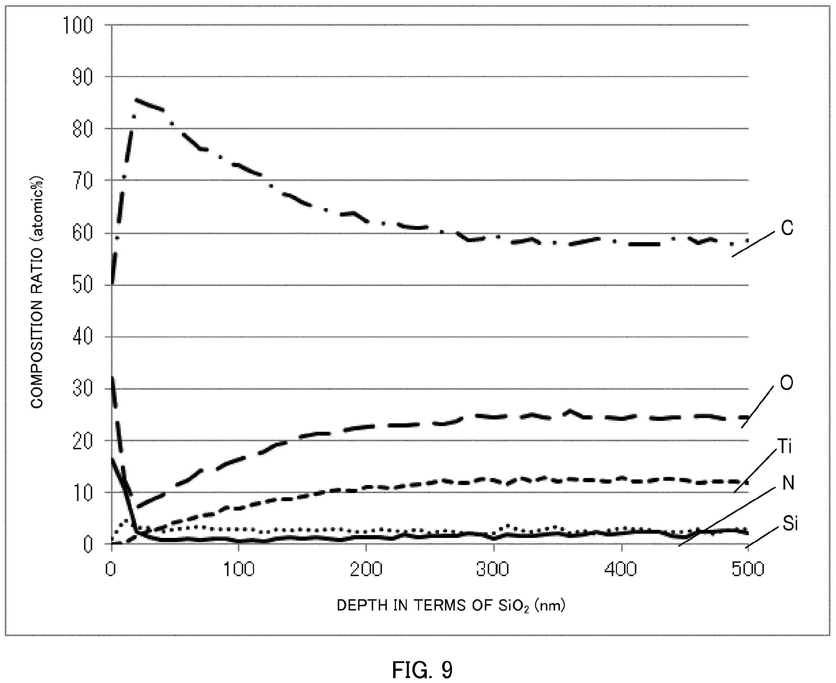

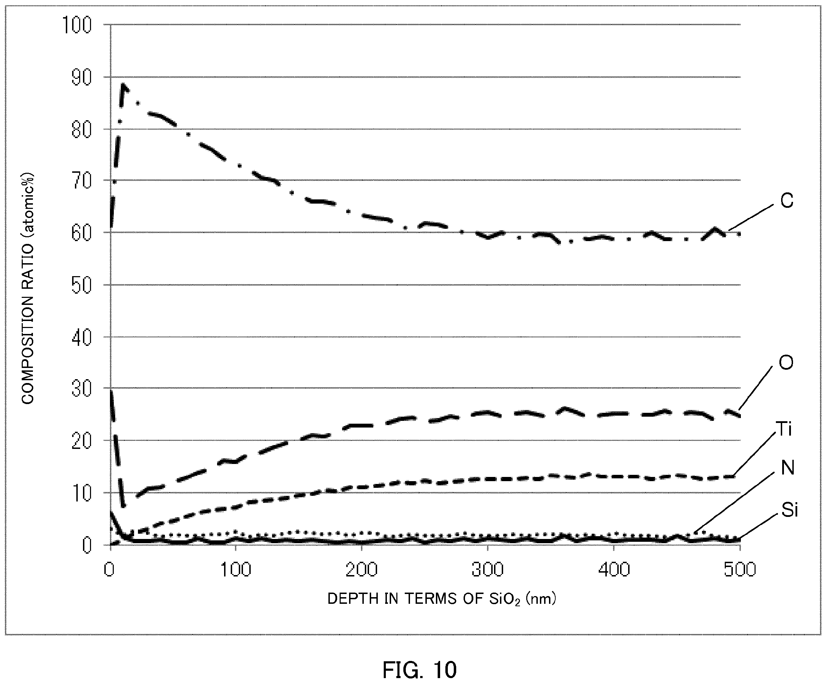

While carrying out etching under the following conditions, XPS measurement was carried out with a scanning X-ray photoelectron spectroscopy apparatus, VersaProbe II manufactured by ULVAC-PHI, INC. Then, Siₓ, and αₓ, α_{y} and α_{z} were all specified where Siₓ is the proportion of Si atoms based on the amount of Si atoms, N atoms, C atoms, O atoms and Ti atoms in the outermost layer, and αₓ is the ratio of the amount of O atoms to the amount of C atoms in the outermost layer, α_{y} is the ratio of the amount of O atoms to the amount of C atoms in the surface layer and α_{z} is the ratio of the amount of O atoms to the amount of C atoms in the main body layer. Furthermore, whether αₓ > α_{z} > α_{y} is satisfied or not was also confirmed. The depth profile curves of the composition ratios of the coating films of Example 19 and Example 24 are shown in FIG. 7 and FIG. 8, respectively. Moreover, along with them, the depth profile curves of the composition ratios of the coating films of Comparative Example 14 and Comparative Example 17 are shown in FIG. 9 and FIG. 10, respectively.

### (Measurement Conditions)

X-ray source: A1Kα (monochrome: 50 W, 15 kV) 1,486.6 eV
Analysis region: 0.2 mmφ
Utilizing charge neutralization (electron gun + ion neutralization gun)

### (Etching Conditions)

Ar ion accelerating voltage: 4 kV
Etching rate: 8.29 nm/min (in terms of SiO₂), measured for every 10 nm

**[Table 10]**

| No. | | Hydrophilizing agent | | | Surface treatment method | Results of XPS analysis | | | | |
|---|---|---|---|---|---|---|---|---|---|---|
| | | Type | Symbol | Amount added (wt%) | | Depth of 0 nm or more to less than10 nm (outermost layer) | | Depth of 10 nm or more to less than100 nm (surface layer) | Depth of 100 nm or more (main body layer) | Satisfying αₓ > α_{z} > α_{y} |
| | | | | | | Six (atm%) | Oₓ/Cₓ αₓ | O_{y}/C_{y} α_{y} | O_{z}/C_{z} α_{z} | |
| Examples | 17 | Methyl-based Silicone resin | U | 1.5 | Flame | 11.6 | 0.82 | 0.16 | 0.43 | Satisfied |
| | 18 | | U | 3.0 | Flame | 17.4 | 1.42 | 0.15 | 0.42 | Satisfied |
| | 19 | | U | 5.0 | Flame | 23.8 | 2.73 | 0.17 | 0.46 | Satisfied |
| | 20 | | U | 9.0 | Flame | 28.3 | 3.13 | 0.14 | 0.44 | Satisfied |
| | 21 | | V | 5.0 | Flame | 22.0 | 2.42 | 0.15 | 0.43 | Satisfied |
| | 22 | Methyl/phenyl-based Silicone resin | W | 1.5 | Flame | 8.4 | 0.92 | 0.16 | 0.41 | Satisfied |
| | 23 | | W | 3.0 | Flame | 14.1 | 1.54 | 0.17 | 0.46 | Satisfied |
| | 24 | | W | 5.0 | Flame | 21.0 | 2.25 | 0.15 | 0.44 | Satisfied |
| | 25 | | W | 9.0 | Flame | 26.3 | 2.71 | 0.15 | 0.42 | Satisfied |
| | 26 | | X | 5.0 | Flame | 20.3 | 2.19 | 0.16 | 0.45 | Satisfied |
| Comparative Examples | 14 | Methyl-based Silicone resin | U | 5.0 | Untreated | 24.1 | 0.52 | 0.16 | 0.43 | Satisfied |
| | 15 | | V | 5.0 | Untreated | 23.4 | 0.64 | 0.15 | 0.42 | Satisfied |
| | 17 | Methyl/phenyl-based Silicone resin | W | 5.0 | Untreated | 18.1 | 0.57 | 0.14 | 0.43 | Satisfied |
| | 18 | | X | 5.0 | Untreated | 17.8 | 0.46 | 0.13 | 0.42 | Satisfied |
| | 19 | Methyl silicate | Y | 5.0 | Untreated | 7.8 | 0.31 | 0.13 | 0.43 | Satisfied |
| | 20 | Ethyl silicate | Z | 5.0 | Untreated | 9.6 | 0.42 | 0.13 | 0.45 | Satisfied |
| | 21 | Methyl silicate | Y | 5.0 | Flame | 6.9 | 0.63 | 0.14 | 0.43 | Satisfied |
| | 22 | Ethyl silicate | Z | 5.0 | Flame | 9.1 | 0.71 | 0.15 | 0.44 | Satisfied |

As shown in above-described Table 9 and Table 10, when Siₐ is 8.0atm% or more and above-described αₓ is 0.8 or more, and furthermore, αₓ, α_{y} and α_{z} satisfy αₓ > α_{z} > α_{y}, all of hardness (pencil hardness), bending processability and rain-streak stain resistance of the coating films were then satisfactory (Examples 17 to 26). In contrast, when the proportion of Si atoms, Siₓ, is less than 8.0atm%, the rain-streak stain resistance was low (Comparative Examples 19 and 21). It is assumed that a sufficient amount of Si atoms were not contained in the surface of the coating film, and therefore, the amount of O atoms in the surface of the coating film was unlikely to be increased sufficiently and it was difficult to enhance hydrophilicity.

In addition, even when the proportion of Si atoms, Siₓ, is 8.0atm% or more, the rain-streak stain resistance was bad as well if αₓ is less than 0.8 (Comparative Examples 14, 15, 17, 18, 20 and 22). It is assumed that the amount of O atoms in the surface of the coating film was small and hydrophilicity was not enhanced sufficiently.

### Industrial Applicability

According to the method for producing a coated metal sheet of the present invention, it is possible to produce a coated metal sheet having high rain-streak stain resistance and scratch resistance, and further having satisfactory appearance. Therefore, that method for producing a coated metal sheet, as well as a coated metal sheet to be obtained by that method, is applicable to exterior building materials for various buildings.

The present application claims priority based on Japanese Patent Application No. 2017-065922 filed on March 29, 2017, Japanese Patent Application No. 2017-109218 filed on June 1, 2017, PCT/JP2017/024064 filed on June 30, 2017 and Japanese Patent Application No. 2017-254240 filed on December 28, 2017, the entire contents of which including the specifications and the accompanying drawings are incorporated herein by reference.

### Reference Signs List

22 Burner head
22a Housing
22b Burner port
22c Auxiliary burner port
23 Gas supply pipe

## Claims

1. A method for producing a coated metal sheet, comprising:
forming a coating film on a surface of a metal sheet by applying and curing a silicone resin-containing coating material; and
subjecting the coating film to a flame treatment,
wherein the silicone resin contains silanol groups in an amount of 5 to 50mol% relative to the total number of moles of Si atoms,
wherein an amount of the silicone resin relative to a solid content of the silicone resin-containing coating material is 1.5weight% or more.

2. The method for producing a coated metal sheet according to claim 1, wherein the silicone resin contains Si atoms derived from trialkoxysilane in an amount of 50 to 100mol% relative to the total number of moles of Si atoms.

3. The method for producing a coated metal sheet according to claim 1 or 2, wherein a proportion of a number of moles of aryl groups directly bonded to Si atoms to a number of moles of alkyl groups directly bonded to Si atoms is 20 to 80% in the silicone resin.

4. The method for producing a coated metal sheet according to any one of claims 1 to 3, wherein the coating material further contains a polyester resin or an acrylic resin.

5. A coated metal sheet, comprising:
a metal sheet; and
a coating film formed on the metal sheet, wherein
the coating film contains a cured product of a silicone resin;
when a surface of the coating film is analyzed with X-ray electron spectroscopy using an AlKα ray as an X-ray source, Siₐ and x satisfy the following expressions respectively, wherein Siₐ is a proportion of Si atoms based on a total amount of Si atoms, N atoms, C atoms, O atoms and Ti atoms, and x is a ratio of an amount of O atoms to an amount of C atoms:
Siₐ ≥ 8atm%
x ≥ 0.8; and
when a C1s peak top in an X-ray photoelectron spectroscopic spectrum obtained through the analysis with X-ray electron spectroscopy is corrected to be 285 eV and a Si₂ₚ spectrum is separated into a peak corresponding to 103.5 eV and a peak corresponding to 102.7 eV, y satisfies the following expression, wherein y is a ratio of a peak area of 103.5 eV, Si_{inorganic}, to a peak area of the entire Si₂ₚ spectrum, Si₂ₚ:
y ≥ 0.6.

6. The coated metal sheet according to claim 5, wherein a methylene iodide sliding angle on the surface of the coating film is 15° or more and 50° or less.

7. The coated metal sheet according to claim 5 or 6, wherein the cured product of a silicone resin comprises a structure derived from methyltrialkoxysilane or phenyltrialkoxysilane.

8. The coated metal sheet according to any one of claims 5 to 7, wherein the coating film contains a polyester resin or an acrylic resin.

9. The coated metal sheet according to any one of claims 5 to 8, wherein the metal sheet is a zinc-based plated steel sheet.

## Patentansprüche

1. Verfahren zur Herstellung eines beschichteten Metallblechs, das Folgendes umfasst:
Bilden eines Beschichtungsfilms auf einer Oberfläche eines Metallblechs durch Aufbringen und Härten eines Silikonharz enthaltenden Beschichtungsmaterials und
Durchführen einer Flammenbehandlung an dem Beschichtungsfilm,
wobei das Silikonharz Silanolgruppen in einer Menge von 5 bis 50 mol-%, bezogen auf die Gesamtzahl der Mole von Si-Atomen, enthält,
wobei die Menge des Silikonharzes, bezogen auf den Feststoffgehalt des Silikonharz enthaltenden Beschichtungsmaterials, 1,5 Gew.-% oder mehr beträgt.

2. Verfahren zur Herstellung eines beschichteten Metallblechs nach Anspruch 1, wobei das Silikonharz von Trialkoxysilan abgeleitete Si-Atome in einer Menge von 50 bis 100 mol-%, bezogen auf die Gesamtzahl der Mole von Si-Atomen, enthält.

3. Verfahren zur Herstellung eines beschichteten Metallblechs nach Anspruch 1 oder 2, wobei der Anteil der Zahl der Mole von direkt an Si-Atome gebundenen Arylgruppen zur Zahl der Zahl der Mole von direkt an Si-Atome gebundenen Alkylgruppen in dem Silikonharz 20 bis 80 % beträgt.

4. Verfahren zur Herstellung eines beschichteten Metallblechs nach einem der Ansprüche 1 bis 3, wobei das Beschichtungsmaterial ferner ein Polyesterharz oder ein Acrylharz enthält.

5. Beschichtetes Metallblech, umfassend:
ein Metallblech und
einen auf dem Metallblech gebildeten Beschichtungsfilm, wobei der Beschichtungsfilm ein gehärtetes Produkt eines Silikonharzes enthält;
wobei dann, wenn eine Oberfläche des Beschichtungsfilms durch Röntgenelektronenspektroskopie unter Verwendung eines AlKα-Strahls als Röntgenquelle analysiert wird, Siₐ und x die folgenden Ausdrücke erfüllen, wobei Siₐ der Anteil von Si-Atomen, bezogen auf die Gesamtmenge an Si-Atomen, N-Atomen, C-Atomen, O-Atomen und Ti-Atomen, ist und x das Verhältnis der Menge von O-Atomen zur Menge von C-Atomen ist:
Siₐ ≥ 8 Atom-%
x ≥ 0,8; und
dann, wenn eine C1s-Peakspitze in einem durch die Analyse mit Röntgenelektronenspektroskopie erhaltenen Röntgenphotoelektronenspektroskopiespektrum auf 285 eV korrigiert wird und ein Si₂ₚ-Spektrum in einen Peak, der 103,5 eV entspricht, und einen Peak, der 102,7 eV entspricht, getrennt wird, y den folgenden Ausdruck erfüllt, wobei Y das Verhältnis der Peakfläche von 103,5 eV, Si_{anorganisch}, zur Peakfläche des gesamten Si₂ₚ-Spektrums, Si₂ₚ, ist:
y ≥ 0,6.

6. Beschichtetes Metallblech nach Anspruch 5, wobei der Methyleniodid-Abrollwinkel auf der Oberfläche des Beschichtungsfilms 15° oder mehr und 50° oder weniger beträgt.

7. Beschichtetes Metallblech nach Anspruch 5 oder 6, wobei das gehärtete Produkt eines Silikonharzes eine von Methyltrialkoxysilan oder Phenyltrialkoxysilan abgeleitete Struktur umfasst.

8. Beschichtetes Metallblech nach einem der Ansprüche 5 bis 7, wobei der Beschichtungsfilm ein Polyesterharz oder ein Acrylharz enthält.

9. Beschichtetes Metallblech nach einem der Ansprüche 5 bis 8, wobei es sich bei dem Metallblech um ein verzinktes Stahlblech handelt.

## Revendications

1. Procédé pour la production d'une feuille métallique revêtue, comprenant :
la formation d'un film de revêtement sur une surface d'une feuille métallique par application et durcissement d'un matériau de revêtement contenant une résine de silicone ; et
la soumission du film de revêtement à un flammage,
la résine de silicone contenant des groupes silanol en une quantité de 5 à 50 % en moles par rapport au nombre total de moles d'atomes de Si,
une quantité de la résine de silicone par rapport à une teneur en solides du matériau de revêtement contenant une résine de silicone étant de 1,5 % en poids ou plus.

2. Procédé pour la production d'une feuille métallique revêtue selon la revendication 1, la résine de silicone contenant des atomes de Si issus d'un trialcoxysilane en une quantité de 50 à 100 % en moles par rapport au nombre total de moles d'atomes de Si.

3. Procédé pour la production d'une feuille métallique revêtue selon la revendication 1 ou 2, une proportion d'un nombre de moles de groupes aryle directement liés à des atomes de Si sur un nombre de moles de groupes alkyle directement liés à des atomes de Si étant de 20 à 80 % dans la résine de silicone.

4. Procédé pour la production d'une feuille métallique revêtue selon l'une quelconque des revendications 1 à 3, le matériau de revêtement contenant en outre une résine de polyester ou une résine acrylique.

5. Feuille métallique revêtue, comprenant :
une feuille métallique ; et
un film de revêtement formé sur la feuille métallique,
le film de revêtement contenant un produit durci d'une résine de silicone ;
lorsqu'une surface du film de revêtement est analysée par spectroscopie électronique à rayons X à l'aide d'un rayonnement AlKα comme une source de rayons X, Siₐ et x satisfont respectivement les expressions suivantes, Siₐ étant une proportion d'atomes de Si sur la base d'une quantité totale d'atomes de Si, d'atomes de N, d'atomes de C,
d'atomes d'O et d'atomes de Ti, et x étant un rapport d'une quantité d'atomes d'O sur une quantité d'atomes de C :
Siₐ ≥ 8 % en atomes
x ≥ 0,8 ; et
lorsqu'un sommet de pic C1s dans un spectre spectroscopique photoélectronique à rayons X obtenu par l'analyse par spectroscopie électronique à rayons X est corrigé pour être de 285 eV et un spectre Si₂ₚ est séparé en un pic correspondant à 103,5 eV et un pic correspondant à 102,7 eV, y satisfait l'expression suivante, y étant un rapport d'une aire de pic de 103,5 eV, Si_{inorganique}, sur une aire de pic du spectre Si₂ₚ entier, Si₂ₚ :
y ≥ 0,6.

6. Feuille métallique revêtue selon la revendication 5, un angle de glissement d'iodure de méthylène sur la surface du film de revêtement étant de 15° ou plus et 50° ou moins.

7. Feuille métallique revêtue selon la revendication 5 ou 6, le produit durci d'une résine de silicone comprenant une structure issue de méthyltrialcoxysilane ou phényltrialcoxysilane.

8. Feuille métallique revêtue selon l'une quelconque des revendications 5 à 7, le film de revêtement contenant une résine de polyester ou une résine acrylique.

9. Feuille métallique revêtue selon l'une quelconque des revendications 5 à 8, la feuille métallique étant une feuille d'acier plaquée à base de zinc.
